# EUROPÄISCHE PATENTSCHRIFT

(11) **EP 4 162 289 B1**
(45) Veröffentlichungstag und Bekanntmachung des Hinweises auf die Patenterteilung: **02.04.2025**
(21) Anmeldenummer: 21730862.6
(22) Anmeldetag: 01.06.2021
(51) Int. Cl.: G01S 7/481, G01S 7/4863

(54) **LIDAR SYSTEM MIT GROBWINKELSTEUERUNG**
LIDAR SYSTEM WITH COARSE ANGLE CONTROL
SYSTÈME LIDAR À COMMANDE GROSSIÈRE D'ANGLE

(30) Priorität: 09.06.2020 DE 102020207176
(43) Veröffentlichungstag der Anmeldung: 12.04.2023
(73) Patentinhaber: Leddartech Inc., Québec, Québec G1P 2J7 (CA)
(72) Erfinder: HÖHMANN, Peter, 13187 Berlin (DE); SCHNARRENBERGER, Martin, 10713 Berlin (DE)
(74) Vertreter: Lavoix
(86) Internationale Anmeldenummer: PCT/EP2021/064693
(87) Internationale Veröffentlichungsnummer: WO 2021/249831

(56) Entgegenhaltungen:
- EP-A1- 3 627 175
- DE-A1- 102017 220 397
- DE-A1- 102017 221 797
- DE-A1- 102019 115 370

## Beschreibung

Verschiedene Ausführungsbeispiele betreffen ein LIDAR-System (d.h. ein "Light Detection And Ranging"-System).

Ein LIDAR-System ist ein Abtastungssystem, welches eine Szene beleuchtet, um Informationen über die Szene zu liefern, z.B. über die darin befindlichen Objekte (z.B. ihre Größe, ihre Geschwindigkeit, ihre Bewegungsrichtung, und Ähnliches). Eine beispielhafte LIDAR-Architektur weist ein Feinwinkelsteuerelement (z.B. ein Optical Phased Array, OPA) und ein (separates) Grobwinkelsteuerelement (z.B. ein Flüssigkristall-Polarisationsgitter, englisch Liquid Crystal Polarization Gräting, LCPG) auf zur Steuerung einer Richtung des auf die Szene emittierten Lichts (mit anderen Worten, zur Strahlführung des in ein Sichtfeld des LIDAR-Systems emittierten Lichts). In dieser beispielhaften Architektur ist das Sichtfeld in eine Mehrzahl von Abschnitten (auch als "Kacheln" bezeichnet) unterteilt, auf welche das Licht gerichtet werden kann (und von denen Licht empfangen werden kann).

Beispielsweise kann das LIDAR-System für Sichtfelder von +/-100 bis +/-600 ausgelegt sein und das LCPG kann 4 bis 16 horizontale Kacheln aufweisen, durch welche das Messsystem durchgeschaltet wird, d.h. die Kacheln im Sichtfeld werden innerhalb eines LIDAR-Frames über das LCPG nacheinander angefahren.

Das LIDAR-System kann beispielsweise 1 bis 16 Laserdioden als Lichtquelle aufweisen, welche auch individuell schaltbar ausgeführt werden können. Die geforderte Auflösung in horizontaler Richtung bei einer typischen LIDAR-Messung beträgt ungefähr von 0.05° bis 1 °. In den allermeisten Fällen reicht es somit nicht, die horizontale Auflösung innerhalb einer LCPG-Kachel mit den Kanälen der Laserdioden zu realisieren, so dass also je ein oder mehrere Laser eine Spalte ausleuchten und so die horizontale Auflösung realisieren. Daher kommt für die horizontale Auflösung noch das Feinwinkelsteuerelement zum Einsatz, d.h. die horizontale Auflösung innerhalb einer der Kacheln des LCPGs wird mit dem Feinwinkelsteuerelement (z.B. mit einem eindimensionalen MEMS-Spiegel) realisiert. Anschaulich wird das Feinwinkelsteuerelement verwendet, um die feine Strahlablenkung in horizontaler Richtung zu realisieren. Das LIDAR-System weist somit eine Komponente zur Realisierung einer feinen Strahlablenkung auf, was die Komplexität des Systems erhöht, z.B. im Hinblick auf die erforderliche Optik und die erforderliche Synchronisation des Betriebs der Komponente mit dem Betrieb der Lichtquelle.

DE 102017221797 A1 offenbart ein LIDAR-System, das wiederholt Messungen zur Erfassung der Umgebung durchführt. Das LIDAR-System umfasst eine Sendeeinheit, eine Erfassungseinheit und eine Steuereinrichtung. Die Sendeeinheit sendet mindestens einen Lichtstrahl aus, um eine Messung durchzuführen, und die Erfassungseinheit erfasst eine während der Messung reflektierte Komponente. Komponenten in der Sendeeinheit und der Erfassungseinheit sind beweglich.

DE 102017220397 A1 lehrt eine Abstandsmesseinheit zur signallaufzeitbasierten Abstandsmessung eines Abstandes zu einem in einem Erfassungsfeld befindlichen Objekt. Die Entfernungsmesseinheit umfasst eine Sendeeinheit mit einer Vielzahl von Sendern zum Aussenden von Impulsen und eine Empfangseinheit zum Empfangen von Echoimpulsen. Die Abstandsmesseinheit ist so konfiguriert, dass die Echoimpulse den verschiedenen Raumwinkelsegmenten zugeordnet werden.

EP 3627175 A1 offenbart einen optoelektronischen Sensor, der einen Lichtempfänger, eine dem Lichtempfänger vorgelagerte Empfangsoptik und eine Steuer- und Auswerteeinheit umfasst. Die Empfangsoptik weist eine Strahlumlenkeinrichtung mit mehreren hintereinander angeordneten schaltbaren Blazegittern unterschiedlicher Gitterkonstanten auf. Die Steuer- und Auswerteeinheit ist dazu eingerichtet, ein Blaze-Gitter in Abhängigkeit von einem gewünschten Ablenkwinkel der Strahlablenkungseinrichtung mit gleichen Gitterkonstanten, aber untereinander unterschiedlichem Blaze-Winkel ein- und auszuschalten.

DE 102019115370 A1 lehrt, dass ein LIDAR-System eine erste Viertelwellenplatte, eine erste Auslenkstufe und einen Detektor umfasst. Die erste Viertelwellenplatte erzeugt einen zirkular polarisierten Abtastlichtstrahl. Die erste Auslenkstufe wählt eine Drehrichtung für einen Polarisationsvektor des Abtaststrahls aus und lenkt den Abtaststrahl um einen ausgewählten Winkel auf der Grundlage der ausgewählten Drehrichtung des Polarisationsvektors ab. Der Detektor empfängt einen reflektierten Strahl, der eine Reflexion des Abtaststrahls vom Objekt ist.

Als weiteres Beispiel kann das LCPG mit Flash-Beleuchtung und einem zweidimensionalen Detektor-Array einer Laufzeit- Kamera (auf Englisch, Time-of-Flight, ToF) verwendet werden. In dieser Konfiguration wird jedoch das gesamte Sichtfeld (auch als Blickfeld gekennzeichnet) der Kamera auf einmal ausgeleuchtet, was zu verringerter Intensität und damit verringerter Reichweite führt.

Verschiedene Ausführungsformen betreffen ein LIDAR-System, bei dem ein Teil der räumlichen Auflösung (z.B. Auflösung in einer ersten Richtung) von der Emitterseite (auch als Sendeseite gekennzeichnet) geliefert wird und ein anderer Teil der räumlichen Auflösung (z.B. Auflösung in einer zweiten Richtung) von der Empfängerseite geliefert wird. In verschiedenen Ausführungsformen werden die Scan-Richtungen der Emitter- und Empfangsseite des LIDAR-Systems vertauscht, so dass die Sendeseite für die Auflösung in einer Richtung (z.B., in der vertikalen Richtung) eingesetzt wird und die Empfangsseite für eine andere Richtung (z.B., die horizontale Richtung).

Ein LIDAR-System kann bereitgestellt werden, bei dem ein Teil der räumlichen Auflösung einer LIDAR-Messung (z.B. räumliche Auflösung in einer ersten Richtung) durch die räumliche Anordnung einer Mehrzahl von Teillichtquellen (z.B. einzelnen Laserdioden) des LIDAR-Systems bereitgestellt wird, und ein anderer Teil der räumlichen Auflösung der LIDAR-Messung (z.B. räumliche Auflösung in einer zweiten Richtung) durch die räumliche Anordnung einer Mehrzahl von Detektorpixein eines Detektors des LIDAR- Systems bereitgestellt wird. Verschiedene Ausführungsformen betreffen ein LIDAR-System, bei dem die (zweidimensionale) räumliche Auflösung der LIDAR-Messung durch die relative Anordnung mehrerer Teillichtquellen zu Detektorpixein bereitgestellt wird.

In den Figuren können die erste Richtung und die zweite Richtung als horizontale Richtung und vertikale Richtung (oder umgekehrt) dargestellt werden. Es versteht sich jedoch, dass es sich bei der ersten Richtung und der zweiten Richtung um zwei beliebige Richtungen in einem Winkel zueinander handeln kann, welche es den Teillichtquellen erlauben, Licht in Richtung des Sichtfeldes des LIDAR-Systems auszusenden, und es den Detektorpixein erlauben, Licht aus dem Sichtfeld des LIDAR-Systems zu empfangen. Zur Veranschaulichung: die erste Richtung und die zweite Richtung können zwei beliebige Richtungen sein, entlang derer eine räumliche Auflösung erzielt werden soll.

Ein LIDAR-System kann ein Grobwinkelsteuerelement aufweisen, zum Steuern einer Strahlrichtung des emittierten Lichts und/oder des empfangenen Lichts. Das Grobwinkelsteuerelement kann derart eingerichtet sein, dass es die Ausbreitungsrichtung sowohl des vom LIDAR-System in das Sichtfeld emittierten Lichts als auch des vom LIDAR-System aus dem Sichtfeld empfangenen Lichts steuert (z.B. verändern kann).

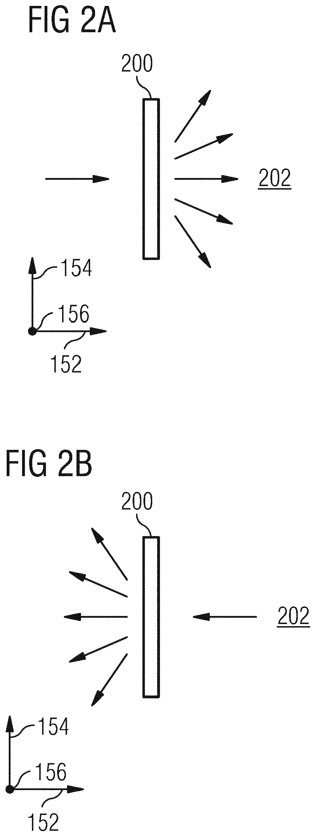

Ein Grobwinkelsteuerelement kann als eine Vorrichtung verstanden werden, welche derart eingerichtet (z.B. steuerbar) ist, dass sie eine Ausbreitungsrichtung des durch das Grobwinkelsteuerelement propagierenden (mit anderen Worten, hindurchtretenden) Lichts steuert. Veranschaulichend kann das Grobwinkelsteuerelement derart eingerichtet sein, dass es einen Ablenkungswinkel (auch als Ablenkwinkel gekennzeichnet) zur Ablenkung des durch das Grobwinkelsteuerelement propagierenden Lichts bereitstellt (z.B. zur Bereitstellung eines steuerbaren Ausgangswinkels). Der Ablenkungswinkel kann durch die Steuerung einer oder mehrerer Eigenschaften des Grobwinkelsteuerelements definiert werden, wie z.B. in Bezug auf Fig. 2A bis Fig. 2F beschrieben wird. Das Grobwinkelsteuerelement kann eine grobe Steuerung des Ablenkungswinkels ermöglichen, so dass der Ablenkungswinkel nicht kontinuierlich variiert werden kann, sondern einen Wert aus einer Mehrzahl von diskreten Werten annehmen kann. Das Grobwinkelsteuerelements kann derart eingerichtet (z.B. gesteuert) werden, dass es einen Betriebszustand aus einer Mehrzahl möglicher Betriebszustände annimmt, wobei der Betriebszustand einen entsprechenden Ablenkungswinkel für das Licht definiert. Die Anzahl der möglichen Betriebszustände (in verschiedenen Aspekten die Anzahl der möglichen Ablenkungswinkel) kann von den Eigenschaften des Grobwinkelsteuerelements abhängen (z.B. von der Anzahl von schaltbaren Flüssigkristallschichten, nur als Beispiel), wie im Folgenden noch näher erläutert wird. Das Grobwinkelsteuerelement kann ein Flüssigkristall-Polarisationsgitter sein oder aufweisen. Es versteht sich jedoch, dass ein Flüssigkristall-Polarisationsgitter nur ein Beispiel für ein mögliches Grobwinkelsteuerelement ist, und es können auch andere Arten von Vorrichtungen verwendet werden (z.B. ein Spiegel).

Im Hinblick auf die diskrete Steuerung des Ablenkungswinkels für die Lichtemission kann das Sichtfeld als aus einer Mehrzahl von "Kacheln" zusammengesetzt betrachtet werden (anschaulich, aus einer Mehrzahl von diskreten Abschnitten). Jede Kachel kann einem entsprechenden Ablenkungswinkel zugeordnet sein. Der Begriff "Kachel" (z.B. Sichtfeldkachel oder LCPG-Kachel) kann hierein verwendet werden, um einen Abschnitt des Sichtfeldes zu beschreiben, in den Licht mittels diskreter Steuerung über einen Ablenkungswinkel des emittierten Lichts abgelenkt werden kann. Eine Kachel kann ferner einen (diskreten) Abschnitt des Sichtfeldes beschreiben, aus dem Licht empfangen (z.B. detektiert) werden kann.

Der Detektor kann für die Auflösung in der ersten Richtung innerhalb einer Kachel eingesetzt werden. Die einzelnen Teillichtquellen oder Gruppen von Teillichtquellen (z.B., Laserdioden oder Gruppen von Laserdioden) können für die Auflösung in der zweiten Richtung innerhalb der Kachel eingesetzt werden. Beispielsweise können der Detektor für die Auflösung in der horizontalen Richtung und die Lichtemitter für die Auflösung in der vertikalen Richtung eingesetzt werden, in einem Fall, dass das Sichtfeld einer Kachel weniger Zeilen als Spalten aufweist. Beispielsweise kann ein Empfangsdioden-Array (z.B. ein Lawinenfotodioden-Array, auf Englisch "avalanche photo diodes", APD) für mehr Zeilen verfügbar sein (z.B. bis 64 oder 128), als Kanäle in einem Laserdioden-Array (z.B. bis 8, 16, oder 32, was aber den Aufwand und Preis signifikant steigern könnte).

Die relative räumliche Anordnung der Detektorpixel und der Teillichtquellen kann in Kombination mit den Winkelablenkungsmöglichkeiten des Grobwinkelsteuerelements einen Verzicht auf ein Feinwinkelablenkungselement, z.B. ein OPA oder auch einen MEMS-Spiegel (nur als Beispiele), ermöglichen. Die räumliche Auflösung innerhalb einer Kachel kann in verschiedenen Ausführungsformen durch eine gekreuzte Anordnung von einer Lichtquelle (z.B. einem Laserbarren) und einem Detektor (z.B. einem 1 D-Detektorarray) erreicht werden. Eine sequenzielle Nutzung der Teillichtquellen (z.B. von Laserdioden eines Laserbarrens, wie beispielsweise eines 8er-Laserbarren oder 16er-Laserbarren) kann bereits eine räumliche Auflösung in eine Richtung ermöglichen. Zur Veranschaulichung können die Teillichtquellen einer Lichtquelle (z.B. die Laserdioden eines Laserbarrens) nacheinander gefeuert (anschaulich, aktiviert) werden, um die räumliche Auflösung bereitzustellen. Dies kann den Vorteil haben, dass sich eine komplizierte Komponente (OPA, MEMS oder ähnlichen) einsparen lässt. Dadurch fällt auch die Ansteuerung dieser Komponente weg (üblicher Weise mit einem FPGA oder ASIC realisiert) und die Optik wird einfacher. Es besteht auch nicht mehr das Problem, dass das Licht von den Teillichtquellen (z.B. von den Lasern) durch das Feinwinkelablenkungselement passen muss. Die Optik besteht aus weniger Linsen, wodurch die Verluste geringer werden und der Montage- Aufwand sich reduziert. Durch Verzicht auf das Feinwinkelablenkungselement werden die Kosten und die Komplexität des LIDAR-Systems deutlich reduziert. Zusätzlich ist ohne das Feinwinkelablenkungselement ein echtes "Solid State" LIDAR gegeben, das vollständig ohne bewegte Teile auskommt, was auch die Zuverlässigkeit erhöhen kann.

Verschiedene Ausführungsformen betreffen ein LIDAR-System, bei dem eine zweidimensionale räumliche Auflösung ermöglicht werden kann, ohne ein Element zur Feinwinkelsteuerung zu verwenden (z.B., ohne einen MEMS-Spiegel zu verwenden). Das LIDAR-System kann in verschiedenen Ausführungsformen als LIDAR-System mit LCPG und ohne MEMS beschrieben werden, beispielsweise als Flash-LIDAR mit LCPG.

Es wird ein LIDAR-System nach Anspruch 1 bereitgestellt. Die abhängigen Ansprüche zeigen bevorzugte Ausführungsformen.

Die zweite Richtung kann senkrecht zu der ersten Richtung sein. Als Beispiel kann die erste Richtung die horizontale Richtung und die zweite Richtung die vertikale Richtung sein. Als weiteres Beispiel kann die erste Richtung die vertikale Richtung und die zweite Richtung die horizontale Richtung sein

Beispielsweise können die erste Richtung und die zweite Richtung senkrecht zu einer optischen Achse des LIDAR-Systems sein.

Das Grobwinkelsteuerelement kann derart eingerichtet sein, dass es Licht unter einem Ablenkungswinkel in Bezug auf die optische Achse des LIDAR-Systems ablenkt. Der Ablenkungswinkel kann ein Winkel aus einer Mehrzahl von diskreten Ablenkungswinkeln sein (z.B. zugeordnet einem jeweiligen Betriebszustand des Grobwinkelsteuerelements).

Das Grobwinkelsteuerelement kann derart eingerichtet sein, dass es Licht aus der Lichtquelle unter einem ersten Ablenkungswinkel ablenkt, um einen Abschnitt des Sichtfeldes zu beleuchten. Anschaulich kann das Grobwinkelsteuerelement derart eingerichtet sein, dass es einen Ablenkungswinkel (und einen Ausgangswinkel) des in das Sichtfeld emittierten Lichts steuert, so dass das Licht in einen Abschnitt des Sichtfeldes ausgesendet wird. Das Grobwinkelsteuerelement kann eingerichtet (z.B. gesteuert) sein, verschiedene Ablenkungswinkel nacheinander bereitzustellen, so dass verschiedene Abschnitte des Sichtfeldes nacheinander beleuchtet werden.

Das Grobwinkelsteuerelement kann derart eingerichtet sein, dass es Licht aus dem Sichtfeld unter einem zweiten Ablenkungswinkel ablenkt, um Licht von einem Abschnitt des Sichtfeldes auf den Detektor abzulenken.

Ein beleuchteter Abschnitt des Sichtfeldes kann eine erste Winkelausdehnung in einer ersten Sichtfeldrichtung von ungefähr 2° bis ungefähr 20° und eine zweite Winkelausdehnung in einer zweiten Sichtfeldrichtung senkrecht zur ersten Sichtfeldrichtung von ungefähr 2° bis ungefähr 20° aufweisen.

Die Winkelausdehnung eines Abschnitts des Sichtfeldes kann von den Eigenschaften des Grobwinkelsteuerelements abhängen. Die Anzahl von Abschnitten, in welchen das Sichtfeld unterteilt werden kann (z.B. in der horizontalen Richtung oder in der vertikalen Richtung), kann von den Eigenschaften des Grobwinkelsteuerelements abhängen.

Beispielsweise können die erste Sichtfeldrichtung und die zweite Sichtfeldrichtung senkrecht zu der optischen Achse des LIDAR-Systems sein. Als Beispiel kann die erste Sichtfeldrichtung die horizontale Richtung sein und die zweite Sichtfeldrichtung die vertikale Richtung sein.

Jeder Abschnitt (z.B. jede Kachel) des Sichtfeldes kann in eine Mehrzahl von Teilabschnitten unterteil sein oder werden, z.B. in eine ersten Mehrzahl von (ersten) Teilabschnitten in der ersten Richtung und in einer zweiten Mehrzahl von (zweiten) Teilabschnitten in der zweiten Richtung.

Ein Teilabschnitt kann einem jeweiligen Detektorpixel zugeordnet sein. Beispielsweise kann jeder Teilabschnitt entlang der Richtung, in welcher die Detektorpixel angeordnet sind, einem jeweiligen Detektorpixel zugeordnet sein. Anschaulich kann jedes Detektorpixel Licht von dem zugeordneten Teilabschnitt detektieren. Die Auflösung in der ersten Richtung kann von der Anzahl von Teilabschnitten (in verschiedenen Aspekte, von der Anzahl von Detektorpixeln) in der ersten Richtung abhängen (z.B. proportional sein). Ein Teilabschnitt kann einer jeweiligen Teillichtquelle zugeordnet sein. Beispielsweise kann jeder Teilabschnitt entlang der Richtung, in welcher die Teillichtquellen angeordnet sind, einer jeweiligen Teillichtquelle zugeordnet sein. Anschaulich kann jede Teillichtquelle Licht in den zugeordneten Teilabschnitt aussenden. Gemäß verschiedenen Ausführungsformen kann die Auflösung in der zweiten Richtung von der Anzahl von Teilabschnitten (in verschiedenen Aspekten, von der Anzahl von Teillichtquellen) in der zweiten Richtung abhängen (z.B. proportional sein).

Zur Realisierung des Ablenkungswinkels können ein erstes Ablenkungswinkelelement (auch als Ablenkungswinkelteil oder Ablenkungswinkelkomponente gekennzeichnet) in einer ersten Sichtfeldrichtung (z.B. in der horizontalen oder vertikalen Richtung) und ein zweites Ablenkungswinkelelement in einer zweiten Sichtfeldrichtung senkrecht zur ersten Sichtfeldrichtung vorgesehen sein. Anschaulich kann das Grobwinkelsteuerelement eingerichtet sein, das Licht in einer Richtung und/oder in zwei Richtungen abzulenken (z.B. das LIDAR-System kann ein 1D-scannendes System oder ein 2D-scannendes System sein).

Nur als numerisches Beispiel kann das erste Ausgangswinkelelement einen Wert in einem Bereich von ungefähr -60° bis ungefähr +60° in Bezug auf die optische Achse des LIDAR-Systems aufweisen. Nur als numerisches Beispiel kann das zweite Ausgangswinkelelement einen Wert in einem Bereich von ungefähr -15° bis ungefähr +15° in Bezug auf die optische Achse des LIDAR-Systems aufweisen.

Die Mehrzahl von Teillichtquellen können eine erste Teillichtquelle und eine zweite Teillichtquelle aufweisen. Der Lichtemissionscontroller kann eingerichtet sein, die erste Teillichtquelle und die zweite Teillichtquelle derart zu steuern, dass die erste Teillichtquelle Licht in einer ersten Emissionszeitperiode aussendet und die zweite Teillichtquelle Licht in einer zweiten Emissionszeitperiode aussendet. Eine Wartezeit zwischen der ersten Emissionszeitperiode und der zweiten Emissionszeitperiode größer als oder im Wesentlichen gleich wie eine maximale Laufzeit des ausgesendeten Lichts ist.

Beispielsweise kann die zweite Emissionszeitperiode auf die erste Emissionszeitperiode folgen (und danach weitere Emissionszeitperioden, z.B. von weiteren Teillichtquellen).

Die Wartezeit ermöglicht, dass das von der ersten Teillichtquelle emittierte Licht zum LIDAR-System zurückkehren kann (und vom Detektor detektiert werden), bevor die zweite Teillichtquelle Licht emittiert. Dadurch kann eine Überlappung zwischen den Lichtemissionen verschiedener Teillichtquellen reduziert oder wesentlich eliminiert und damit die Qualität der Messung verbessert werden.

Das LIDAR-System kann ferner einen Winkelsteuercontroller aufweisen, welcher eingerichtet ist, eine oder mehrere Lichtumlenkungseigenschaften des Grobwinkelsteuerelements zu steuern, um einen Ablenkungswinkel des abgelenkten Lichts zu definieren. Der Winkelsteuercontroller kann eingerichtet sein, das Grobwinkelsteuerelement derart zu steuern, dass es einen ersten Ablenkungswinkel des abgelenkten Lichts in einer ersten Winkelsteuerzeitperiode bereitstellt, und dass es einen zweiten Ablenkungswinkel des abgelenkten Lichts in einer zweiten Winkelsteuerzeitperiode bereitstellt. Beispielsweise kann die zweite Winkelsteuerzeitperiode auf die zweite Winkelsteuerzeitperiode folgen. Beispielsweise kann der Winkelsteuercontroller eingerichtet sein, die Lichtumlenkungseigenschaften des Grobwinkelsteuerelements derart zu steuern, dass nacheinander verschiedene Ablenkungswinkel bereitgestellt werden können.

Der Lichtemissionscontroller kann eingerichtet sein, die Teillichtquellen der Mehrzahl von Teillichtquellen derart zu steuern, dass jede Teillichtquelle Licht in der jeweiligen Emissionszeitperiode innerhalb der ersten Winkelsteuerzeitperiode aussendet, und dass jede Teillichtquelle Licht in der jeweiligen Emissionszeitperiode innerhalb der zweiten Winkelsteuerzeitperiode aussendet.

Anschaulich kann der Lichtemissionscontroller eingerichtet sein, die Teillichtquellen der Mehrzahl von Teillichtquellen derart zu steuern, dass ein Abschnitt des Sichtfeldes (z.B. dem ersten Ablenkungswinkel zugeordnet) vollständig beleuchtet wird (anders ausgedrückt, dass jeder Teilabschnitt von der zugeordneten Teillichtquelle beleuchtet wird).

Das Grobwinkelsteuerelement kann mindestens ein Flüssigkristallelement aufweisen. Als Beispiel kann das Grobwinkelsteuerelement ein Flüssigkristall-Polarisationsgitter sein oder aufweisen. Eine Gitterperiode des Flüssigkristall-Polarisationsgitters kann den Ablenkungswinkel definieren.

Als weiteres Beispiel kann das Grobwinkelsteuerelement eine Flüssigkristallschicht und ein Polarisationsgitter aufweisen. Die Flüssigkristallschicht kann derart eingerichtet sein, dass sie eine Polarisation des durch die Flüssigkristallschicht propagierenden Lichts definiert. Das Polarisationsgitter kann eingerichtet sein, den Ablenkungswinkel des Lichts basierend auf dessen Polarisation zu definieren.

Das Grobwinkelsteuerelement kann ein Flüssigkristall-Polarisationsgitter sein oder aufweisen. Der Winkelsteuercontroller kann derart eingerichtet sein, dass er ein Steuersignal (z.B. eine Spannung, wie eine modulierte Spannung, beispielsweise eine Gleichspannung, die an und aus geschaltet wird) dem Flüssigkristall-Polarisationsgitter bereitstellt, um eine Ausrichtung der Flüssigkristallmoleküle zu steuern. Die Ausrichtung der Flüssigkristallmoleküle definiert eine Gitterperiode des Flüssigkristall-Polarisationsgitters.

Beispielsweise kann der Winkelsteuercontroller derart eingerichtet sein, dass er ein erstes Steuersignal zu dem Flüssigkristall-Polarisationsgitter in einer ersten Winkelzeitperiode bereitstellt, um eine erste Gitterperiode des Flüssigkristall-Polarisationsgitters zu definieren. Der Winkelsteuercontroller kann derart eingerichtet sein, dass er ein zweites Steuersignal zu dem Flüssigkristall-Polarisationsgitter in einer zweiten Winkelzeitperiode (z.B. nach der ersten Winkelzeitperiode) bereitstellt, um eine zweite Gitterperiode des Flüssigkristall-Polarisationsgitters zu definieren. Anschaulich kann der Winkelsteuercontroller die Gitterperiode des Flüssigkristall-Polarisationsgitters steuern, um verschiedene Ablenkungswinkel bereitzustellen.

Das Grobwinkelsteuerelement kann eine Flüssigkristallschicht und ein Polarisationsgitter aufweisen. Der Winkelsteuercontroller kann derart eingerichtet sein, dass er ein Steuersignal zu der Flüssigkristallschicht bereitstellt, um eine Ausrichtung der Flüssigkristallmoleküle der Flüssigkristallschicht zu steuern. Die Ausrichtung der Flüssigkristallmoleküle definiert (z.B. verändert) die Polarisation des durch die Flüssigkristallschicht propagierenden Lichts

Beispielsweise kann der Winkelsteuercontroller derart eingerichtet sein, dass er ein erstes Steuersignal zu der Flüssigkristallschicht in einer ersten Winkelzeitperiode bereitstellt, um eine erste Polarisation des durch die Flüssigkristallschicht propagierenden Lichts zu definieren. Der Winkelsteuercontroller kann derart eingerichtet sein, dass er ein zweites Steuersignal zu der Flüssigkristallschicht in einer zweiten Winkelzeitperiode bereitstellt, um eine zweite Polarisation des durch die Flüssigkristallschicht propagierenden Lichts zu definieren. Das Polarisationsgitter kann somit einen ersten Ablenkungswinkel für das Licht in der ersten Winkelzeitperiode basierend auf der ersten Polarisation bereitstellen und einen zweiten Ablenkungswinkel für das Licht in der zweiten Winkelzeitperiode basierend auf der zweiten Polarisation bereitstellen.

Die Lichtquelle kann mindestens eine Laserlichtquelle aufweisen. Beispielsweise können die Teillichtquellen mindestens eine Laserlichtquelle (z.B. kann jede Teillichtquelle eine Laserlichtquelle sein oder aufweisen). Beispielsweise kann die mindestens eine Laserlichtquelle eine Laserdiode aufweisen. Als Beispiel kann die mindestens eine Laserdiode eine kantenemittierende Laserdiode oder eine Bauteilseite Licht-emittierende Diode (auf Englisch "Vertical Cavity Surface Emitting Laser", VCSEL) sein.

Die Lichtquelle kann einen Laserbarren aufweisen. Anschaulich können die Teillichtquellen Laserdioden des Laserbarrens sein. Beispielsweise kann eine schnelle Achse des Laserbarrens entlang der Richtung ausgerichtet sein, in welcher die Teillichtquellen angeordnet sind (z.B. entlang der zweiten Richtung).

Der Detektor kann mindestens eine Fotodiode aufweisen. Die Fotodiode kann derart eingerichtet sein, dass sie ein elektrisches Signal (z.B. eine Spannung oder einen Strom) erzeugt, wenn Licht auf die mindestens eine Fotodiode auftrifft. Beispielsweise kann jedes Detektorpixel eine Fotodiode aufweisen bzw. einer jeweiligen Fotodiode zugeordnet (z.B. verbunden) sein. Es versteht sich, dass jedes Detektorpixel auch eine Mehrzahl von Fotodioden aufweisen kann bzw. einer Mehrzahl von Fotodioden zugeordnet sein kann (z.B. nach Art eines Silizium-Fotovervielfacher, englisch Silicon Photomultiplier). Beispielsweise kann die mindestens eine Fotodiode eine Lawinenfotodiode sein, z.B. eine Einzelphotonen-Lawinenfotodiode sein. Anschaulich kann der Detektor eine Multipixel-Einzelphotonen-Lawinenfotodiode sein oder aufweisen.

Das LIDAR-System kann ferner eine Empfängeroptikanordnung aufweisen. Die Empfängeroptikanordnung kann derart eingerichtet sein, dass sie Licht aus dem Sichtfeld empfängt und das empfangene Licht auf den Detektor richtet. In verschiedenen Aspekten kann die Empfängeroptikanordnung eingerichtet sein, das Sichtfeld (z.B. einen Abschnitt des Sichtfeldes) auf den Detektor abzubilden. Beispielsweise kann die Empfängeroptikanordnung derart eingerichtet sein, dass sie einen jeweiligen Teilabschnitt des Sichtfeldes auf das zugeordnete Detektorpixel abbildet. Beispielsweise kann die Empfängeroptikanordnung zwischen dem Detektor und dem Grobwinkelsteuerelement angeordnet sein.

Die Empfängeroptikanordnung kann ein oder mehrere Linsen aufweisen (z.B. ein oder mehrere Fokussierungslinsen). Die ein oder mehreren Linsen können eingerichtet sein, das empfangene Licht auf den Detektor (z.B. auf den jeweiligen Detektorpixeln) zu fokussieren.

Das LIDAR-System kann ferner eine Aussendungsoptikanordnung aufweisen. Die Aussendungsoptikanordnung kann eingerichtet sein, Licht aus der Lichtquelle (z.B. aus den Teillichtquellen) zu empfangen und das empfangene Licht auf das Grobwinkelsteuerelement zu richten. Beispielsweise kann die Aussendungsoptikanordnung zwischen der Lichtquelle und dem Grobwinkelsteuerelement angeordnet sein. Die Aussendungsoptikanordnung eine erste Kollimatorlinse aufweisen. Die erste Kollimatorlinse kann derart eingerichtet sein, dass sie das von der Lichtquelle emittierte Licht auf das Grobwinkelsteuerelement kollimiert. Beispielsweise kann die erste Kollimatorlinse derart eingerichtet sein, dass sie Licht in einer ersten (optischen) Richtung kollimiert. Beispielsweise kann die erste Kollimatorlinse das Licht in der Richtung der langsamen Achse der Lichtquelle kollimieren, beispielsweise in einer Richtung senkrecht zu der Richtung, in welcher die Teillichtquellen angeordnet sind. Beispielsweise kann die erste Kollimatorlinse eine "langsame Achse-Kollimatorlinse" (auf Englisch, "Slow-Axis Collimator", SAC) sein.

Die Aussendungsoptikanordnung kann eine zweite Kollimatorlinse aufweisen. Die zweite Kollimatorlinse kann zwischen der Lichtquelle und der ersten Kollimatorlinse angeordnet sein. Die zweite Kollimatorlinse kann derart eingerichtet sein, dass sie das von der Lichtquelle emittierte Licht auf die erste Kollimatorlinse kollimiert. Beispielsweise kann die zweite Kollimatorlinse derart eingerichtet sein, dass sie Licht in einer zweiten (optischen) Richtung kollimiert. Beispielsweise kann die zweite Kollimatorlinse das Licht in der Richtung der schnellen Achse der Lichtquelle kollimieren, beispielsweise in der Richtung, in welcher die Teillichtquellen angeordnet sind. Beispielsweise kann die zweite Kollimatorlinse eine "schnelle Achse-Kollimatorlinse" (auf Englisch, "Fast-Axis Collimator", FAC) sein.

Die Aussendungsoptikanordnung kann ferner ein Multilinsen-Array aufweisen, zum Mischen des von jeder Teillichtquelle der Mehrzahl von Teillichtquellen emittierten Lichts. Beispielsweise kann das Multilinsen-Array zwischen der Lichtquelle und dem Grobwinkelsteuerelement angeordnet sein (z.B. zwischen der ersten Kollimatorlinse und dem Grobwinkelsteuerelement). Das Multilinsen-Array kann eine Zonenstruktur entlang der zweiten Richtung aufweisen (anschaulich, entlang der Richtung, in welcher die Teillichtquellen angeordnet sind). Die Zonenstruktur ermöglicht, dass das von einer Teillichtquelle emittierte Licht von dem von einer anderen Teillichtquelle emittierten Licht gut getrennt ist.

Das LIDAR-System kann als ein Flash-LIDAR-System eingerichtet sein oder werden.

Ein Fahrzeug kann ein oder mehrere LIDAR-Systeme wie hierin beschrieben aufweisen.

Ausführungsbeispiele sind in den Figuren dargestellt und werden im Folgenden näher erläutert.

Es Zeigen
Figur 1A und 1B jeweils eine schematische Darstellung eines LIDAR-Systems.
Figur 1C eine schematische Darstellung eines Sichtfeldes eines LIDAR-Systems.
Figur 2A und 2B jeweils eine schematische Darstellung eines Grobwinkelsteuerelements.
Figur 2C einen ersten Betriebsmodus eines Grobwinkelsteuerelements.
Figur 2D ein beleuchtetes Sichtfeld in einem ersten Betriebsmodus eines Grobwinkelsteuerelements.
Figur 2E einen zweiten Betriebsmodus eines Grobwinkelsteuerelements.
Figur 2F ein beleuchtetes Sichtfeld in einem zweiten Betriebsmodus eines Grobwinkelsteuerelements.
Figur 3A bis 3C jeweils eine schematische Darstellung einer Lichtquelle.
Figur 3D eine schematische Darstellung einer Kachel eines Grobwinkelsteuerelements.
Figur 3E bis 3H jeweils eine schematische Darstellung eines Lichtemissionssystems.
Figur 4A bis 4C jeweils eine schematische Darstellung eines Detektors.
Figur 4D eine schematische Darstellung einer Kachel eines Grobwinkelsteuerelements.
Figur 4E eine schematische Darstellung einer Empfängeranordnung.
Figur 5A bis 5C jeweils eine schematische Darstellung eines LIDAR-Systems.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann.

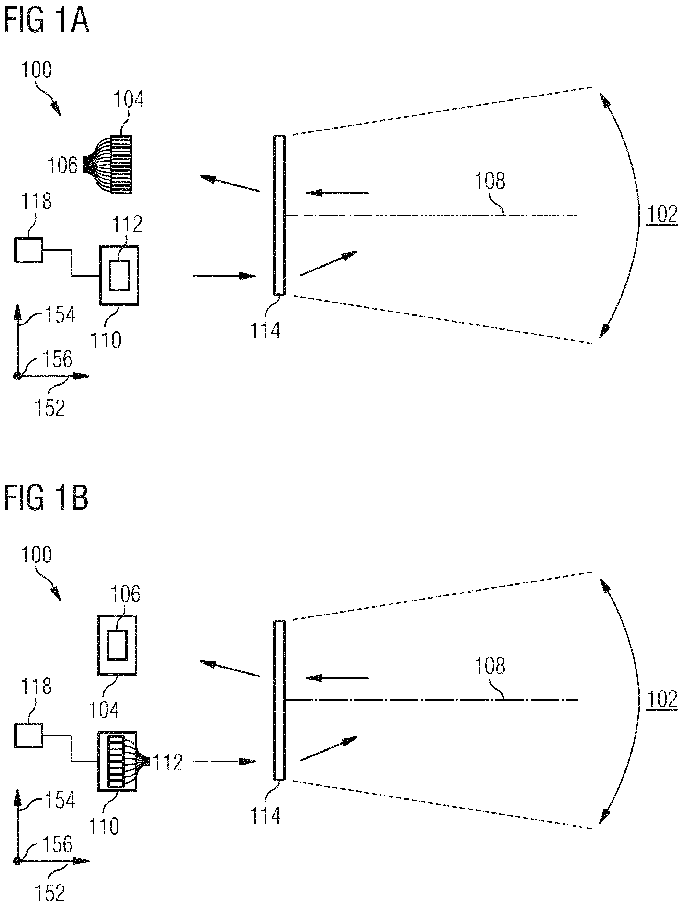

**Fig. 1A** und **Fig. 1B** zeigen jeweils eine schematische Darstellung einer Draufsicht eines LIDAR-Systems 100 gemäß verschiedenen Ausführungsformen. Als Beispiel kann das LIDAR-System 100 in ein Fahrzeug eingebaut (z.B. integriert) sein oder werden (z.B. in ein Auto, welches beispielsweise mit automatisierten Fahrfunktionen ausgestattet ist).

Das LIDAR-System 100 kann eine Emitterseite zum Aussenden von Licht in ein Sichtfeld 102 und eine Empfängerseite zum Empfangen (z.B. zum Detektieren) von Licht aus dem Sichtfeld 102 aufweisen. Das LIDAR-System 100 kann ferner eine Winkelsteuerstufe aufweisen, zur Steuerung (z.B. zur Änderung) der Ausbreitungsrichtung des Lichts von der Emitterseite zum Sichtfeld 102 und/oder vom Sichtfeld 102 zur Empfängerseite.

Das Sichtfeld 102 kann das Sichtfeld des LIDAR-Systems 100 sein. Anschaulich kann das Sichtfeld 102 dem Emissionsfeld der Emitterseite (z.B. dem Emissionsfeld einer Lichtquelle bzw. einer Mehrzahl von Teillichtquellen) entsprechen und/oder dem Sichtfeld der Empfängerseite (z.B. dem Sichtfeld eines Detektors) entsprechen. Anschaulich kann das Sichtfeld eines Detektors des LIDAR-Systems 100 dem Emissionsfeld einer Lichtquelle (z.B. einer Mehrzahl von Teillichtquellen) des LIDAR-Systems 100 im Wesentlichen entsprechen.

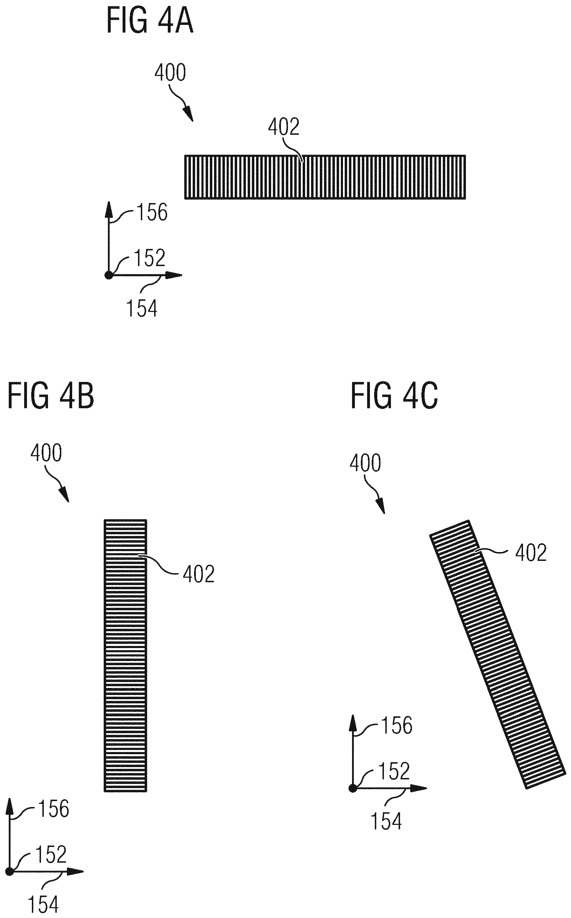

Das LIDAR-System 100 kann einen Detektor 104 aufweisen (z.B. auf der Empfängerseite, beispielsweise als Teil eines Lichtdetektionssystems). Der Detektor 104 kann eingerichtet sein, Licht aus dem Sichtfeld 102 zu detektieren. Der Detektor 104 kann derart eingerichtet sein, dass er ein Signal bereitstellt (z.B. ein elektrisches Signal, wie eine Spannung oder einen Strom), wenn Licht auf den Detektor 104 (z.B. auf ein oder mehreren Detektorpixeln) auftrifft, wie im Folgenden noch näher erläutert wird (beispielsweise in Bezug auf Fig. 4A bis Fig. 4E).

Das Signal kann beispielsweise von dem Detektor 104 zu ein oder mehreren Prozessoren des LIDAR-Systems 100 bereitgestellt werden (z.B. kann ein analoges Signal vom Detektor 104 mittels eines Analog-Digital-Wandlers in ein digitales Signal umgewandelt und den Prozessoren geliefert werden). Die ein oder mehrere Prozessoren können beispielsweise eingerichtet sein, das Signal (bzw. die Signale) vom Detektor 104 zu analysieren, um die Szene im Sichtfeld 102 nachzuvollziehen.

Der Detektor 104 kann eine Mehrzahl von Detektorpixeln 106 aufweisen. Die Detektorpixel 106 der Mehrzahl von Detektorpixeln 106 können entlang einer ersten Richtung angeordnet sein (z.B. entlang der horizontalen Richtung wie in Fig. 1A gezeigt ist oder entlang der vertikalen Richtung wie in Fig. 1B gezeigt ist). In verschiedenen Ausführungsformen können die Detektorpixel 106 ein Array entlang der ersten Richtung bilden. Mindestens ein Detektorpixel 106 (z.B. jedes Detektorpixel 106) kann derart eingerichtet sein, dass es ein Signal (z.B. einen Strom, wie einen Fotostrom) erzeugt, wenn Licht auf das Detektorpixel 106 auftrifft (z.B. kann das Signal proportional zur Menge des einfallenden Lichts sein), wie im Folgenden noch näher erläutert wird.

Jedes Detektorpixel 106 der Mehrzahl von Detektorpixeln 106 kann einem jeweiligen Teilabschnitt des Sichtfeldes 102 zugeordnet sein. In verschiedenen Aspekten kann jedes Detektorpixel 106 der Detektion von Licht aus einem entsprechenden Teilabschnitt des Sichtfeldes 106 zugeordnet sein oder werden. Zur Veranschaulichung: jedes Detektorpixel 106 kann Licht aus dem zugehörigen Teilabschnitt des Sichtfeldes 102 empfangen, um Licht davon zu detektieren. In verschiedenen Aspekten kann die Empfängerseite (und/oder die Winkelsteuerungsstufe) des LIDAR-Systems 100 derart eingerichtet sein, dass jeder Teilabschnitt des Sichtfeldes 102 auf das zugehörige Detektorpixel 106 abgebildet wird.

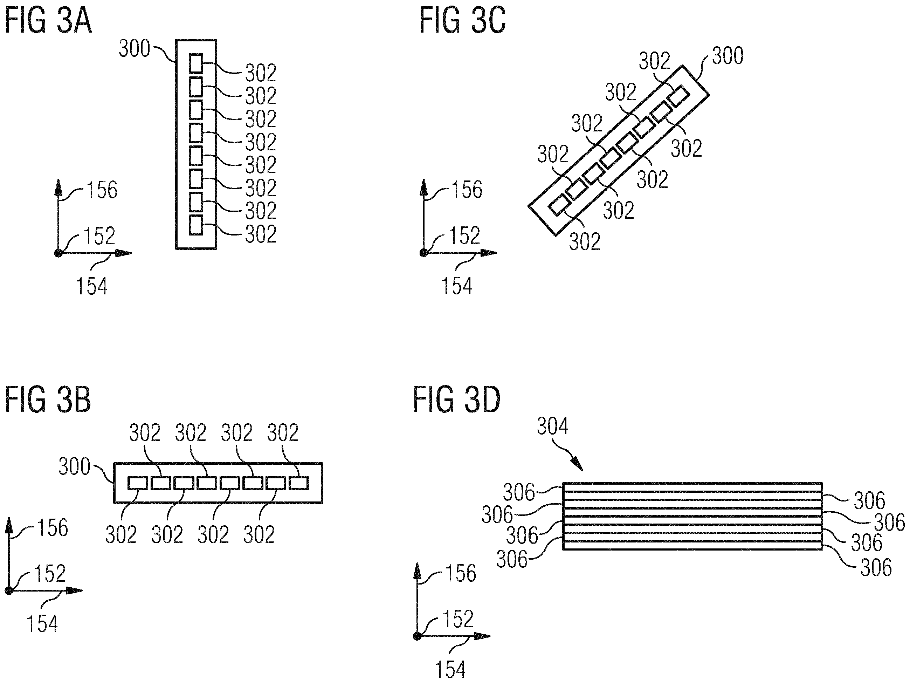

Das LIDAR-System 100 (z.B., bei der Emitterseite, beispielsweise als Teil eines Lichtemissionssystems) kann eine Lichtquelle 110 aufweisen. Die Lichtquelle 110 kann eine Mehrzahl von Teillichtquellen 112 (auch als Lichtstrahler, Lichtemitter oder Emitterpixel gekennzeichnet) aufweisen. In verschiedenen Aspekten kann die Lichtquelle 110 eine Mehrzahl von einzelnen Lichtquellen 112 aufweisen, welche individuell adressierbar (z.B. steuerbar) sind, wie im Folgenden noch näher erläutert wird, z.B. in Bezug auf die Fig. 3A bis Fig. 3G. Die Teillichtquellen 112 (im Allgemeinen, die Lichtquelle 110) können derart eingerichtet sein, dass sie Licht in das Sichtfeld 102 aussenden.

Die Teillichtquellen 112 der Mehrzahl von Teillichtquellen 112 können entlang einer zweiten Richtung angeordnet sein. In verschiedenen Aspekten können die Teillichtquellen 112 ein Array in der zweiten Richtung bilden.

Die zweite Richtung kann in einem Winkel zu der ersten Richtung sein. Der Winkel zwischen der ersten Richtung und der zweiten Richtung kann nicht 0° oder 180° betragen, anders ausgedrückt kann die erste Richtung nicht parallel zur zweiten Richtung verlaufen (anschaulich kann die zweite Richtung nicht dieselbe Richtung sein wie die erste Richtung). Die erste Richtung und die zweite Richtung können zwei beliebige Richtungen sein, die einen Winkel miteinander bilden und das Aussenden und Empfangen von Licht ermöglichen. Zur Veranschaulichung: die erste Richtung kann eine beliebige Richtung sein, die einen Winkel mit einer optischen Achse 108 des LIDAR-Systems 100 bildet und es dem Detektor 104 ermöglicht, Licht aus dem Sichtfeld 102 zu empfangen. Die zweite Richtung kann eine beliebige Richtung sein, die einen Winkel mit der optischen Achse 108 des LIDAR-Systems 100 bildet und es der Lichtquelle 110 (z.B. den Teillichtquellen 112) ermöglicht, Licht in Richtung des Sichtfeldes 102 auszusenden. Die erste Richtung und die zweite Richtung können in verschiedenen Aspekten senkrecht zur optischen Achse 108 des LIDAR-Systems 100 verlaufen (z.B. kann die optische Achse 108 entlang der Richtung 152 in Fig. 1A und Fig. 1B ausgerichtet sein).

Die erste Richtung und die zweite Richtung können in verschiedenen Ausführungsformen senkrecht zueinander sein. Zum Beispiel kann die erste Richtung die horizontale Richtung, z.B. die Richtung 154 in Fig. 1A und Fig. 1B, und die zweite Richtung die vertikale Richtung sein, z.B. die Richtung 156 in Fig. 1A und Fig. 1B. In diesem Fall können die Detektorpixel 106 in einer Reihe und die Lichtquellen 112 in einer Spalte angeordnet sein (siehe Fig. 1A). Als weiteres Beispiel kann die erste Richtung die vertikale Richtung und die zweite Richtung die horizontale Richtung sein. In diesem Fall können die Detektorpixel 106 in einer Spalte und die Lichtquellen 112 in einer Reihe angeordnet sein (siehe Fig. 1B).

Jede Teillichtquelle 112 kann einem jeweiligen Teilabschnitt des Sichtfeldes 102 (oder einer jeweiligen Mehrzahl von Teilabschnitten) zugeordnet sein. Die Teillichtquellen 112 können derart eingerichtet (z.B. angeordnet) sein, dass jede Teillichtquelle 112 einen jeweiligen Teilabschnitt des Sichtfeldes 102 beleuchtet (z.B. einen Teilabschnitt einer Kachel, wie im Folgenden noch näher erläutert wird). In verschiedenen Aspekten kann die Emitterseite (und/oder die Winkelsteuerungsstufe) des LIDAR-Systems 100 derart eingerichtet sein, dass jeder Teilabschnitt des Sichtfeldes 102 von der zugehörigen Teillichtquelle 112 beleuchtet wird.

Die relative räumliche Anordnung (z.B. die gekreuzte Anordnung) der Detektorpixel 106 zu den Teillichtquellen 112 (und die Zuordnung von Detektorpixeln 106 und Teillichtquellen 112 zu jeweiligen Teilabschnitten des Sichtfeldes 102) kann ermöglichen, dass die Detektorpixel 106 verwendet werden können, räumliche Auflösung in der ersten Richtung bereitzustellen, und dass die Teillichtquellen 112 verwendet werden können, räumliche Auflösung in der zweiten Richtung bereitzustellen.

Das LIDAR-System 100 (z.B. das Lichtemissionssystem) kann einen Lichtemissionscontroller 118 aufweisen (z.B. ein oder mehrere Prozessoren). Der Lichtemissionscontroller 118 kann eingerichtet sein, die Lichtemission der Lichtquelle 110 zu steuern. In verschiedenen Aspekten kann der Lichtemissionscontroller 118 die Teillichtquellen 112 der Mehrzahl von Teillichtquellen 112 derart zu steuern, dass jede Teillichtquelle 112 Licht in einer jeweiligen Emissionszeitperiode aussendet.

Der Lichtemissionscontroller 118 kann jeder Teillichtquelle 112 eine Emissionszeitperiode zuordnen, so dass eine einzelne Teillichtquelle 112 in jeder Emissionszeitperiode Licht emittiert. Zur Veranschaulichung: der Lichtemissionscontroller 118 kann eingerichtet sein, die Teillichtquellen 112 derart zu steuern, dass jede Teillichtquelle 112 während des zugehörigen Emissionszeitperiode Licht aussendet und nicht während des mit einer anderen Teillichtquelle 112 verbundenen Emissionszeitperiode. Dies kann ermöglichen, dass es zu im Wesentlich keiner (z.B. zeitlichen und/oder räumlichen) Überlappung bei der Lichtemission der Teillichtquellen 112 kommt. Dadurch kann eine beliebige (z.B. vordefinierte) räumliche Auflösung in der Richtung, entlang der die Teillichtquellen 112 angeordnet sind, erreicht werden.

Der Lichtemissionscontroller 118 kann eingerichtet sein, die Teillichtquellen 112 derart zu steuern, dass sie Licht in Übereinstimmung (z.B. in Synchronisation) mit einer Steuerung eines Grobwinkelsteuerelements 114 aussenden, wie im Folgenden noch näher erläutert wird.

Das LIDAR-System 100 kann (z.B. bei der Winkelsteuerungsstufe) ein Grobwinkelsteuerelement 114 aufweisen. Das Grobwinkelsteuerelement 114 kann eingerichtet sein, Licht abzulenken, z.B. sowohl Licht, welches von der Lichtquelle 110 in das Sichtfeld 102 emittiert wird, als auch Licht, welches aus dem Sichtfeld 102 in Richtung des Detektors 104 (z.B. in Richtung der Empfängerseite) kommt. Anders ausgedrückt kann das Grobwinkelsteuerelement 114 derart eingerichtet sein, dass es Licht aus der Lichtquelle 110 (z.B. aus den Teillichtquellen 112) zu dem Sichtfeld 102 ablenkt (z.B. unter einem ersten Ablenkungswinkel) und dass es Licht aus dem Sichtfeld 102 zu dem Detektor 104 ablenkt (z.B. unter einem zweiten Ablenkungswinkel). Das Grobwinkelsteuerelement 114 kann derart eingerichtet sein, dass es das Licht unter mehreren Ablenkungswinkeln (z.B. diskreten Ablenkungswinkeln) ablenkt, wie es beispielsweise in Bezug auf die Fig. 2A bis Fig. 2F beschrieben wird.

Gemäß verschiedenen Ausführungsformen kann das Grobwinkelsteuerelement 114 eingerichtet sein, Licht von den Teillichtquellen 112 in das Sichtfeld 102 unter einem (z.B. diskreten) Ablenkungswinkel derart abzulenken, dass einen Abschnitt des Sichtfeld 102 beleuchtet wird. Anschaulich kann das Grobwinkelsteuerelement 114 derart eingerichtet sein, dass es einen Ablenkungswinkel (und einen Ausgangswinkel) des in das Sichtfeld 102 emittierten Lichts steuert, so dass das Licht in einen Abschnitt des Sichtfeldes 102 ausgesendet wird. Das Grobwinkelsteuerelement 114 kann eingerichtet (z.B. gesteuert) sein, verschiedene Ablenkungswinkel nacheinander bereitzustellen, so dass verschiedene Abschnitte des Sichtfeldes 102 nacheinander beleuchtet werden, wie im Folgenden noch näher erläutert wird.

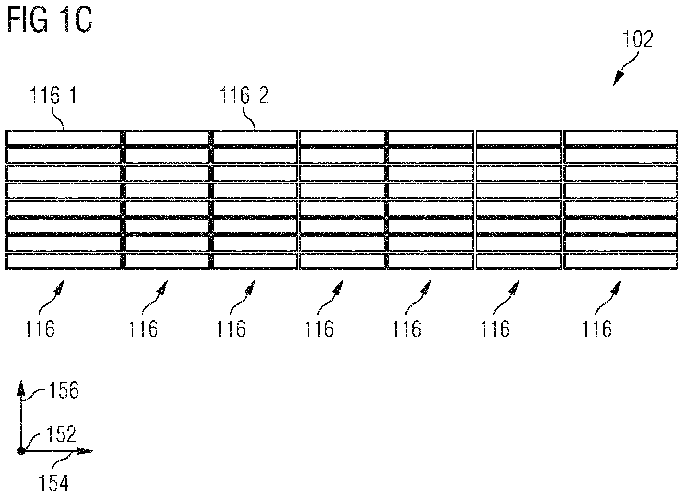

Das Sichtfeld 102 kann so verstanden werden, dass es eine Mehrzahl von Abschnitten (Kacheln) aufweist, die jeweils einem entsprechenden Ablenkungswinkel zugeordnet sind. Eine beispielhafte Unterteilung des Sichtfeldes 102 in eine Mehrzahl von Abschnitten 116 ist in **Fig. 1C** dargestellt, gemäß verschiedenen Ausführungsformen.

Das Sichtfeld 102 kann eine erste Mehrzahl von Abschnitten entlang der ersten Richtung und eine zweite Mehrzahl von Abschnitten entlang der zweiten Richtung aufweisen (z.B. kann in die erste Mehrzahl und in die zweite Mehrzahl von Abschnitten unterteilt werden). Als ein nicht einschränkendes Beispiel, wie in Fig. 1C dargestellt ist, kann das Sichtfeld 102 als eine Matrix von Kacheln 116 beschrieben werden, welche entlang der horizontalen Richtung und der vertikalen Richtung angeordnet sind (z.B. das Sichtfeld 102 kann in eine Mehrzahl von Zeilen und Spalten unterteilt sein, denen jeweils eine Mehrzahl von Kacheln 116 zugeordnet ist). Es versteht sich, dass die Unterteilung des Sichtfeldes 102 (z.B. die Anordnung der Kacheln 116) jede Form und Konfiguration haben kann, z.B. abhängig von der relativen Anordnung der ersten Richtung in Bezug auf die zweite Richtung.

Gemäß verschiedenen Ausführungsformen kann die Anzahl der Kacheln 116, in welche das Sichtfeld 102 unterteilt ist (z.B. die Anzahl der Kacheln 116 in der ersten Richtung und in der zweiten Richtung), von der Konfiguration des LIDAR-Systems 100 abhängen, z.B. von der Konfiguration des Grobwinkelsteuerelements 114. Die Winkelausdehnung des Sichtfeldes 102 in der ersten Richtung und in der zweiten Richtung kann von der Konfiguration des LIDAR-Systems 100 abhängen. Nur als numerisches Beispiel kann das Sichtfeld 102 eine Winkelausdehnung mit einem Wert in einem Bereich von 100° bis 130° in horizontaler Richtung aufweisen (z.B. 120°, d.h. von +/-60° in Bezug auf die optische Achse 108). Als weiteres numerisches Beispiel kann das Sichtfeld 102 eine Winkelausdehnung mit einem Wert in einem Bereich von 10° bis 60° in vertikaler Richtung aufweisen (z.B. 20°, d.h. von +/-10° in Bezug auf die optische Achse 108, oder 24°)

Nur als numerisches Beispiel, wie in Fig. 1C gezeigt ist, kann das Sichtfeld 102 sieben in horizontaler Richtung und acht in vertikaler Richtung angeordnete Kacheln aufweisen. Als weiteres numerisches Beispiel kann das Sichtfeld 102 acht Kacheln in horizontaler Richtung und vier Kacheln in vertikaler Richtung aufweisen. Als weiteres numerisches Beispiel kann das Sichtfeld 102 acht Kacheln in horizontaler Richtung und sechs Kacheln in vertikaler Richtung umfassen.

Die Größe, z.B. die Winkelausdehnung, einer Kachel 116 kann von den Eigenschaften des Grobwinkelsteuerelements 114 abhängen (z.B. von den mit dem Grobwinkelsteuerelement 114 erreichbaren Winkeln).

Die Kacheln 116 können alle die gleiche Größe haben (z.B. die gleiche Winkelausdehnung in der ersten Richtung und in der zweiten Richtung). In verschiedenen Aspekten kann mindestens eine Kachel 116 in Bezug auf eine andere Kachel 116 eine andere Größe haben. Beispielsweise kann eine Kachel 116 an einem Rand des Sichtfeldes 102 eine größere Größe haben, als eine Kachel 116 in der Mitte des Sichtfeldes 102 (z.B. eine größere Winkelausdehnung, z.B. in horizontaler Richtung, wie in Fig. 1C für eine erste Kachel 116-1 mit einer größeren Größe als eine zweite Kachel 116-2 dargestellt ist).

Als numerisches Beispiel kann eine Kachel 116 eine erste Winkelausdehnung in einer ersten Sichtfeldrichtung (z.B. in der ersten Richtung) mit einem Wert in einem Bereich von ungefähr 2° bis ungefähr 20° aufweisen. Zum Beispiel kann eine Kachel 116 eine Winkelausdehnung in horizontaler Richtung von ungefähr 4°, beispielsweise von ungefähr 7.5°, beispielsweise von ungefähr 15°, aufweisen.

Als numerisches Beispiel kann eine Kachel 116 eine zweite Winkelausdehnung in einer zweiten Sichtfeldrichtung (z.B. senkrecht zur ersten Sichtfeldrichtung, wie beispielsweise in der zweiten Richtung) mit einem Wert in einem Bereich von ungefähr 2° bis ungefähr 20° aufweisen. Zum Beispiel kann eine Kachel 116 eine Winkelausdehnung in vertikaler Richtung von ungefähr 2.5°, beispielsweise von ungefähr 4°, beispielsweise von ungefähr 6°, beispielsweise von ungefähr 15°, aufweisen.

Jede Kachel 116 des Sichtfeldes 102 kann in eine Mehrzahl von Teilabschnitten unterteilt sein oder werden, z.B. in eine ersten Mehrzahl von (ersten) Teilabschnitten in der ersten Richtung und in eine zweiten Mehrzahl von (zweiten) Teilabschnitten in der zweiten Richtung.

Die räumliche Auflösung des LIDAR-Systems 100 in einer Richtung (z.B. in der ersten und/oder der zweiten Richtung) kann von der Winkelausdehnung einer Kachel 116 entlang dieser Richtung und von der Anzahl von Detektorpixeln 112 oder Teillichtquellen 116 abhängen, welche entlang dieser Richtung angeordnet sind. Die Auflösung des LIDAR-Systems 100 kann in einer Richtung berechnet werden, indem die Winkelausdehnung einer Kachel 116 entlang dieser Richtung geteilt wird durch die Anzahl von entlang dieser Richtung angeordneten Teillichtquellen 112 oder Detektorpixeln 106. Anschaulich kann die Anzahl von entlang einer Richtung angeordneten Teillichtquellen 112 oder Detektorpixeln 106 der Anzahl von Teilabschnitten entsprechen, in welchen eine Kachel 116 in dieser Richtung unterteilt werden kann.

Als numerisches Beispiel, in einem Fall, dass eine Kachel 116 eine Winkelausdehnung in horizontaler Richtung von 15° aufweist und 64 Detektorpixel 106 in dieser Richtung angeordnet sind, kann eine Auflösung in dieser Richtung von ungefähr 0.23° erreicht werden. Als weiteres numerisches Beispiel, in einem Fall, dass eine Kachel 116 eine Winkelausdehnung in vertikaler Richtung von 2.5° aufweist und 8 Teillichtquellen 112 in dieser Richtung angeordnet sind, kann eine Auflösung in dieser Richtung von ungefähr 0.31° erreicht werden. Als weiteres numerisches Beispiel, in einem Fall, dass eine Kachel 116 eine Winkelausdehnung von 7.5°x4° aufweist, der Detektor 104 64 in der horizontalen Richtung angeordneten Detektorpixeln 106 aufweist und die Lichtquelle 110 16 in der vertikalen Richtung angeordneten Teillichtquellen 112 aufweist, können eine horizontale Auflösung von ungefähr 0.12° und eine vertikale Auflösung von ungefähr 0.25° erreicht werden. Als weiteres numerisches Beispiel, in einem Fall, dass eine Kachel 116 eine Winkelausdehnung von 4°x6° aufweist, der Detektor 104 32 in der vertikalen Richtung angeordneten Detektorpixeln 106 aufweist und die Lichtquelle 110 16 in der horizontalen Richtung angeordneten Teillichtquellen 112 aufweist, können eine horizontale Auflösung von ungefähr 0.25° und eine vertikale Auflösung von ungefähr 0.19° erreicht werden.

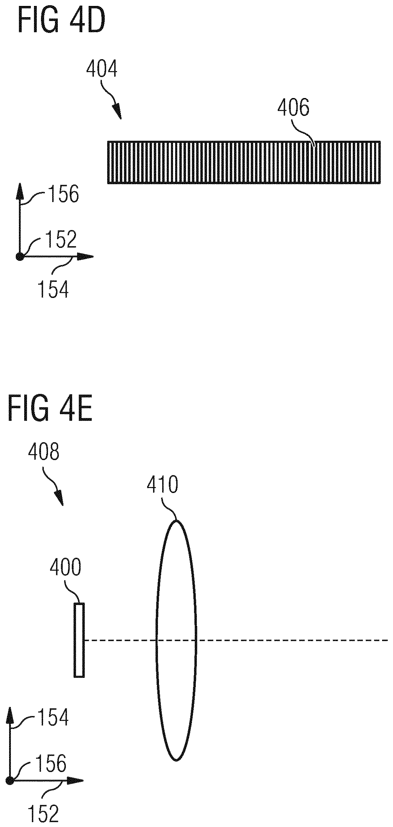

Das Grobwinkelsteuerelement 114 kann derart eingerichtet sein, dass es das Licht aus dem Sichtfeld 102 unter einem zweiten Ablenkungswinkel zum Detektor 104 ablenkt. Das Grobwinkelsteuerelement 114 kann derart eingerichtet sein, dass es Licht aus dem Sichtfeld 102 empfängt und das empfangene Licht auf die Empfängerseite des LIDAR-Systems 100 ablenkt (z.B. zu einer Empfängeroptikanordnung, wie beispielsweise in Bezug auf die Fig. 4E beschrieben wird).

Der erste Ablenkungswinkel kann den gleichen Wert wie der zweite Ablenkungswinkel aufweisen (z.B. in Bezug auf die optische Achse 108, z.B. in horizontaler Richtung und/oder in vertikaler Richtung). In verschiedenen Aspekten kann der erste Ablenkungswinkel im Vergleich zum zweiten Ablenkungswinkel einen anderen Wert aufweisen, z.B. in Abhängigkeit von der Richtung des einfallenden Lichts und/oder von einem Zustand des Grobwinkelsteuerelements 114.

**Fig. 2A** und **Fig. 2B** zeigen jeweils eine schematische Darstellung eines Grobwinkelsteuerelements 200 (z.B. des Grobwinkelsteuerelements 114, welches in Fig. 1A und Fig. 1B dargestellt ist).

Das Grobwinkelsteuerelement 200 kann derart eingerichtet sein, dass es Licht in mehrere Richtungen ablenkt, wie durch die Pfeile in Fig. 2A und Fig. 2B dargestellt ist, z. B. um Licht mit mehreren Ablenkungswinkel abzulenken. Das abgelenkte Licht kann in Richtung eines Sichtfeldes 202 (z.B. eins Sichtfeldes eines LIDAR-Systems, z.B. in das Sichtfeld 102 des LIDAR-Systems 100) abgelenkt werden (siehe Fig. 2A), um beispielsweise einen Teil des Sichtfeldes 202 zu beleuchten. Das abgelenkte Licht kann Licht sein, das aus dem Sichtfeld 202 empfangen wird, z.B. um es auf einen Detektor eines LIDAR-Systems abzulenken (z.B. auf den Detektor 104 des LIDAR-Systems 100), siehe Fig. 2B. In verschiedenen Aspekten kann das Grobwinkelsteuerelement 200 derart eingerichtet sein, dass es Licht mit einem Ablenkungswinkel unabhängig von der Richtung, in welche sich das Licht ausbreitet, ablenkt. Der Ablenkungswinkel kann ein Winkel in Bezug auf eine optische Achse des Grobwinkelsteuerelements 200 sein (z.B. in Bezug auf eine optische Achse eines LIDAR-Systems, z.B. die optische Achse 108 des LIDAR-Systems 100).

Der Ablenkungswinkel kann aus einer Mehrzahl von (diskreten) Ablenkungswinkeln ausgewählt werden. Anders ausgedrückt, das Grobwinkelsteuerelement 200 kann derart eingerichtet (z.B. gesteuert) sein, dass es einen Ablenkungswinkel aus einem Satz möglicher Ablenkungswinkel bereitstellt. In verschiedenen Aspekten kann jeder Ablenkungswinkel einem jeweiligen Betriebszustand des Grobwinkelsteuerelements 200 zugeordnet sein. Eine Winkelauflösung des Grobwinkelsteuerelements 200 (z.B. eine minimale Differenz zwischen möglichen Ablenkungswinkeln) kann von den Eigenschaften des Grobwinkelsteuerelements 200 abhängen. Zum Beispiel kann das Grobwinkelsteuerelement 200 eine Winkelauflösung (z.B. in horizontalter und/oder vertikaler Richtung) von 10° aufweisen, beispielsweise von 5°, beispielsweise größer als 1° oder größer als 3°. Als weiteres Beispiel kann das Grobwinkelsteuerelement 200 eine Winkelauflösung in einem Bereich von ungefähr 1° bis ungefähr 15° aufweisen. Nur als numerisches Beispiel kann das Grobwinkelsteuerelement 200 eine Winkelauflösung von 7.5° in der horizontalen Richtung und von 6° in der vertikalen Richtung aufweisen.

Das Grobwinkelsteuerelement 200 kann eingerichtet sein, Licht in einer Richtung und/oder in zwei Richtungen abzulenken. Der Ablenkungswinkel kann ein erstes Ablenkungswinkelelement in einer ersten Sichtfeldrichtung (z.B. in der horizontalen oder vertikalen Richtung) und ein zweites Ablenkungswinkelelement in einer zweiten Sichtfeldrichtung in einem Winkel zur ersten Sichtfeldrichtung (z.B. senkrecht zur ersten Sichtfeldrichtung) aufweisen. Beispielsweise können die erste Sichtfeldrichtung und die zweite Sichtfeldrichtung senkrecht zur optischen Achse des Grobwinkelsteuerelements 200 sein.

Der Bereich eines Wertes eines Ablenkungswinkelelements in einer Richtung kann die Winkelausdehnung des Sichtfeldes 202 in dieser Richtung definieren. Als ein Beispiel kann das erste Ausgangswinkelelement einen Wert in einem Bereich von ungefähr -60° bis ungefähr +60° in Bezug auf die optische Achse des Grobwinkelsteuerelements 200 aufweisen. Als ein weiteres Beispiel kann das zweite Ausgangswinkelelement einen Wert in einem Bereich von ungefähr -15° bis ungefähr +15° in Bezug auf die optische Achse des Grobwinkelsteuerelements 200 aufweisen.

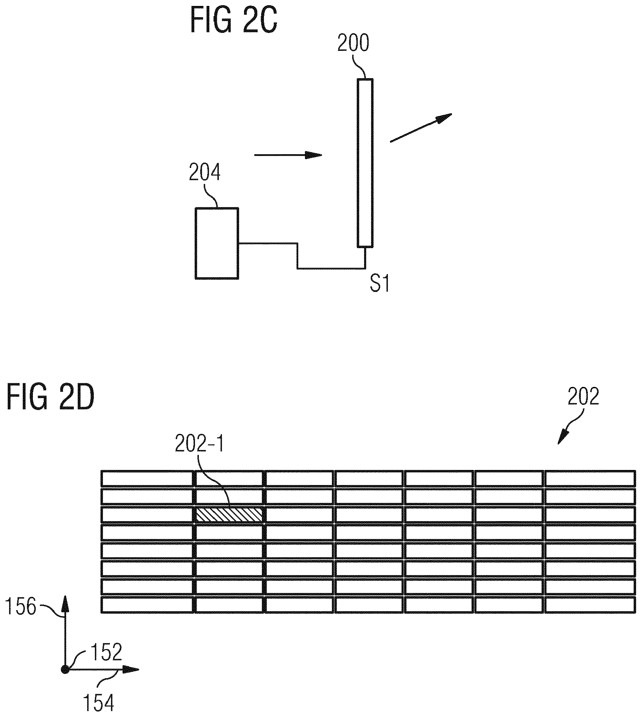

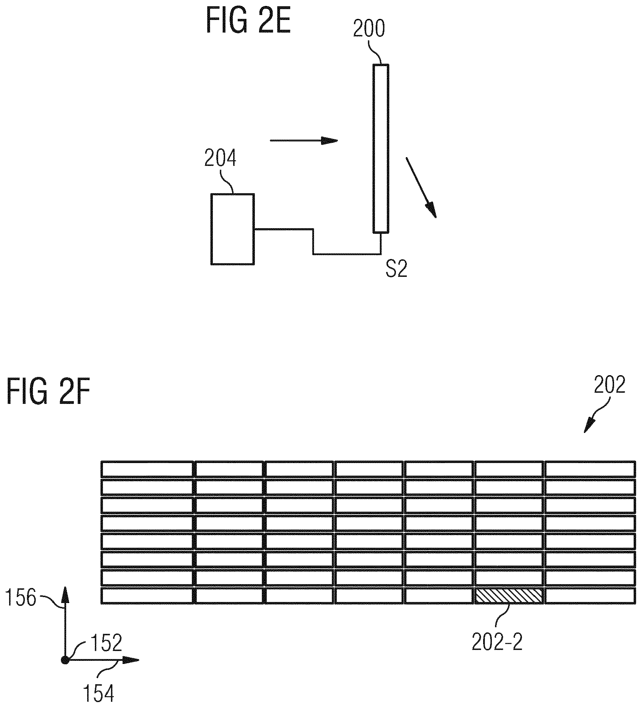

Ein Winkelsteuercontroller 204 kann eingerichtet sein, das Grobwinkelsteuerelement 200 zu steuern, wie in **Fig. 2C** und **Fig. 2E** dargestellt ist. Beispielsweise kann der Winkelsteuercontroller 204 Teil eines LIDAR-Systems sein, z.B. des LIDAR-Systems 100.

Der Winkelsteuercontroller 204 kann eingerichtet sein, eine oder mehrere Lichtumlenkungseigenschaften des Grobwinkelsteuerelements 200 zu steuern, um einen Ablenkungswinkel des abgelenkten Lichts zu definieren. Der Winkelsteuercontroller 204 kann eingerichtet sein, das Grobwinkelsteuerelement 200 in einen Betriebszustand zu bringen, um den zugehörigen Ablenkungswinkel bereitzustellen.

Der Winkelsteuercontroller 204 kann eingerichtet sein, ein Steuersignal (z.B. eine Steuerspannung) dem Grobwinkelsteuerelement 200 bereitzustellen (z.B. zu liefern), um das Grobwinkelsteuerelement 200 in einen Betriebszustand (z.B. dem Steuersignal zugeordnet) zu bringen. Beispielsweise kann der Winkelsteuercontroller 204 eingerichtet sein, ein Steuersignal von einer Mehrzahl von Steuersignalen dem Grobwinkelsteuerelement 200 bereitzustellen, um das Grobwinkelsteuerelement 200 in einen Betriebszustand von einer Mehrzahl von Betriebszuständen zu bringen.

Der Winkelsteuercontroller 204 kann eingerichtet sein, ein erstes Steuersignal S1 dem Grobwinkelsteuerelement 200 bereitzustellen, um einen ersten Ablenkungswinkel zu definieren (z.B. um eine erste Kachel 202-1 des Sichtfeldes 202 zu beleuchten), wie in Fig. 2C und Fig. 2D dargestellt ist. Der Winkelsteuercontroller 204 kann eingerichtet sein, ein zweites Steuersignal S2 dem Grobwinkelsteuerelement 200 bereitzustellen, um einen zweiten Ablenkungswinkel zu definieren (z.B. um eine zweite Kachel 202-2 des Sichtfeldes 202 zu beleuchten), wie in Fig. 2E und Fig. 2F dargestellt ist.

In Fig. 2C bis Fig. 2F ist gezeigt, dass der Winkelsteuercontroller 204 ein Steuersignal an das Grobwinkelsteuerelement 200 liefert, um verschiedene Abschnitte des Sichtfeldes 202 zu beleuchten. Es versteht sich, dass ein ähnlicher Vorgang im Falle von Licht, welches aus dem Sichtfeld 202 empfangen (und z.B. auf einen Detektor abgelenkt) wird, ausgeführt werden kann.

Gemäß verschiedenen Ausführungsformen kann der Winkelsteuercontroller 204 eingerichtet sein, das Grobwinkelsteuerelement derart zu steuern, dass es einen Ablenkungswinkel in einer jeweiligen Zeitperiode (auch als Winkelsteuerzeitperiode gekennzeichnet) bereitstellt. Der Winkelsteuercontroller 204 kann eingerichtet sein, das Grobwinkelsteuerelement derart zu steuern, dass es eine Mehrzahl von Ablenkungswinkeln in einer Mehrzahl von jeweiligen Winkelsteuerzeitperioden (z.B. nacheinander) bereitstellt, z.B. um sequentiell verschiedene Kacheln des Sichtfeldes 102 zu beleuchten.

Der Winkelsteuercontroller 204 kann eingerichtet sein, das Grobwinkelsteuerelement 200 derart zu steuern, dass es einen ersten Ablenkungswinkel des abgelenkten Lichts in einer ersten Winkelsteuerzeitperiode bereitstellt, (z.B., um eine erste Kachel 202-1 des Sichtfeldes 202 zu beleuchten), siehe beispielsweise die Fig. 2D. Der Winkelsteuercontroller 204 kann eingerichtet sein, das Grobwinkelsteuerelement 200 derart zu steuern, dass es einen zweiten Ablenkungswinkel des abgelenkten Lichts in einer zweiten Winkelsteuerzeitperiode bereitstellt, (z.B., um eine zweite Kachel 202-2 des Sichtfeldes 202 zu beleuchten), siehe beispielsweise die Fig. 2F. Beispielsweise kann die zweite Winkelsteuerzeitperiode auf die zweite Winkelsteuerzeitperiode folgen (und danach weitere Winkelsteuerzeitperiode mit weiteren Ablenkungswinkel folgen können). Anschaulich kann der Winkelsteuercontroller 204 das Grobwinkelsteuerelement derart steuern, dass die Kacheln nacheinander beleuchtet werden. Die Reihenfolge, in der die Kacheln beleuchtet werden, kann jedem gewünschten Beleuchtungsmuster entsprechen. Beispielsweise können die Kacheln nacheinander entlang einer gleichen Spalte oder einer gleichen Zeile beleuchtet werden. Im Fall, dass das Element ein LCPG ist oder aufweist, können die Kacheln auf eine Weise beleuchtet werden, die die Anzahl der langsamen Übergänge in den Flüssigkristallen reduziert (z.B. minimiert).

Der Betrieb des Winkelsteuercontrollers 204 kann in Übereinstimmung mit der Lichtemission sein, z.B. mit dem Betrieb eines Lichtemissionscontrollers (z.B. des Lichtemissionscontrollers 118 des LIDAR-Systems 100), wie im Folgenden noch näher erläutert wird. Der Winkelsteuercontrollers 204 kann eingerichtet sein, den Betriebszustand des Grobwinkelsteuerelements 200 (und den Ablenkungswinkel) zu verändern, nachdem die Kachel des Sichtfeldes, welche dem aktuellen Betriebszustand zugeordnet ist, vollständig beleuchtet wurde (z.B. von jeder Teillichtquelle 112 des LIDAR-Systems 100). Anders ausgedrückt, erst wenn alle Teillichtquelle (z.B. Laserdioden) nacheinander mindestens einmal eine gesamte Kachel beleuchtet haben schaltet das Grobwinkelsteuerelement (z.B. das LCPG) zur nächsten Kachel weiter.

Das Grobwinkelsteuerelement 200 kann mindestens ein (z.B. schaltbares) Flüssigkristallelement aufweisen. Beispielsweise kann das Flüssigkristallelement eine Schicht mit Flüssigkristallmolekülen aufweisen, welche zwischen zwei Elektroden (z.B. zwei ITO-Elektroden) angeordnet ist, z.B. auf einem Glassubstrat.

In verschiedenen Aspekten kann das Grobwinkelsteuerelement 200 eine Mehrzahl von Flüssigkristallelemente aufweisen. Jedes Flüssigkristallelement kann einen jeweiligen Teilablenkungswinkel definieren, wie im Folgenden noch näher erläutert wird. Der Ablenkungswinkel des Grobwinkelsteuerelements 200 kann von einer Kombination (z.B. einer Summe) der Mehrzahl von Teilablenkungswinkeln definiert werden.

Das Grobwinkelsteuerelement 200 kann eine Lambda/4-Platte aufweisen, welche stromaufwärts dem (ersten) Flüssigkristallelement angeordnet ist, um linear polarisiertes Licht in zirkular polarisiertes Licht umzuwandeln.

Das Grobwinkelsteuerelement 200 (z.B. das mindestens eine Flüssigkristallelement) kann ein Flüssigkristall-Polarisationsgitter sein oder aufweisen (z.B. ein schaltbares nematisches Flüssigkristall-Polarisationsgitter, beispielsweise aufweisend ein photopolymerisierbares Polymer). Eine Gitterperiode des Flüssigkristall-Polarisationsgitters kann den Ablenkungswinkel definieren.

Der Flüssigkristall kann periodisch gepolt sein und eine Gitterstruktur aufweisen, welche durch die Ausrichtung der Flüssigkristallmoleküle definiert ist. Die Ausrichtung der Flüssigkristallmoleküle kann den Ablenkungswinkel des durch das Flüssigkristall-Polarisationsgitter propagierenden Lichts definieren (z.B. steuern oder verändern). Das Flüssigkristall-Polarisationsgitter kann derart eingerichtet sein, dass es Licht in drei mögliche Richtungen ablenkt oder durchlässt (in verschiedenen Aspekten, mit drei möglichen Ablenkungswinkeln), abhängig von der Gitterperiode und von der Polarisation des einfallenden Lichts.

In einem ersten Betriebszustand wird das einfallende Licht, falls keine Spannung (z.B. Steuerspannung) an das Flüssigkristall-Polarisationsgitter angelegt wird, je nach seiner Polarisation in eine erste Richtung oder in eine zweite Richtung abgelenkt (z.B. je nach Polarisationszustand, beispielsweise recht- oder linkszirkular). Das Licht wird mit einem ersten Ablenkungswinkel oder mit einem zweiten Ablenkungswinkel (z.B. entgegengesetzt zum ersten Ablenkungswinkel in Bezug auf eine optische Achse des Gitters) abgelenkt. In diesem Fall wird auch die Polarisation des Ausgangslichts in die entgegengesetzte orthogonale Polarisation umgekehrt (z.B. von rechtszirkular zu linkszirkular oder umgekehrt). In einem zweiten Betriebszustand wird im Falle des Anlegens einer Spannung die Gitterperiode (in einigen Aspekten das Gitterprofil) gelöscht und das einfallende Licht kann im Wesentlichen unverändert durchlaufen (z.B. unter einem dritten Ablenkungswinkel mit einem Wert von im Wesentlichen 0°).

Der Winkelsteuercontroller 204 kann eingerichtet sein, das Flüssigkristall-Polarisationsgitter zu steuern. Der Winkelsteuercontroller 204 kann derart eingerichtet sein, dass er ein Steuersignal (z.B. eine Spannung, beispielsweise anders als eine Gleichspannung) zu dem Flüssigkristall-Polarisationsgitter bereitstellt, um die Ausrichtung der Flüssigkristallmoleküle (z.B. ein oder mehrere Gittereigenschaften des Flüssigkristall-Polarisationsgitters) zu steuern.

Beispielsweise kann der Winkelsteuercontroller 204 derart eingerichtet sein, dass er ein erstes Steuersignal (z.B. eine erste Steuerspannung) zu dem Flüssigkristall-Polarisationsgitter in einer ersten Winkelzeitsteuerperiode bereitstellt, um eine erste Gitterperiode des Flüssigkristall-Polarisationsgitters (z.B. die Anwesenheit einer Gitterperiode) zu definieren. Der Winkelsteuercontroller 204 kann derart eingerichtet sein, dass er ein zweites Steuersignal (z.B. eine zweite Steuerspannung) zu dem Flüssigkristall-Polarisationsgitter in einer zweiten Winkelsteuerzeitperiode bereitstellt, um eine zweite Gitterperiode des Flüssigkristall-Polarisationsgitters (z.B. die Abwesenheit einer Gitterperiode) zu definieren. Als ein Beispiel kann die erste Steuerspannung einen Wert von 0 V aufweisen, so dass die jeweilige Gittereigenschaft je nach Polarisation des Lichts einen (ersten oder zweiten) Ablenkungswinkel bereitstellen kann. Als ein weiteres Beispiel kann die zweite Steuerspannung einen Wert größer als den Wert der ersten Steuerspannung aufweisen, um die Gitterperiode zu löschen, so dass Licht unverändert durch das Gitter fahren kann.

Anschaulich kann der Winkelsteuercontroller 204 die Gitterperiode des Flüssigkristall-Polarisationsgitters steuern, um verschiedene Ablenkungswinkel bereitzustellen.

In einigen Aspekten kann das Flüssigkristall-Polarisationsgitter eine Mehrzahl von Flüssigkristall-Polarisationsgittern aufweisen. Jedes Flüssigkristall-Polarisationsgitter kann derart eingerichtet sein, das Licht in jeweiligen drei Richtungen abzulenken. Jedes Flüssigkristall-Polarisationsgitter kann vom Ablenkungswinkel sowohl addieren als auch subtrahieren, wodurch ein größerer Winkelbereich bereitgestellt werden kann. Die Anzahl der möglichen Ablenkungswinkel kann somit von der Anzahl der Flüssigkristall-Polarisationsgitter abhängen. In dieser Konfiguration kann die Steuerspannung eine Mehrzahl von Steuerspannungen aufweisen, welche der Mehrzahl von Flüssigkristall-Polarisationsgittern zugeführt werden, um deren Gittereigenschaften individuell zu steuern.

Gemäß verschiedenen Ausführungsformen kann das Grobwinkelsteuerelement 200 eine Flüssigkristallschicht und ein Polarisationsgitter aufweisen. Die Flüssigkristallschicht kann derart eingerichtet sein, dass sie eine Polarisation des durch die Flüssigkristallschicht propagierenden Lichts definiert. Die Ausrichtung der Flüssigkristallmoleküle definiert (z.B. verändert) die Polarisation des durch die Flüssigkristallschicht propagierenden Lichts. Anschaulich kann die Flüssigkristallschicht als schaltbarer Polarisationswähler eingerichtet sein, z.B. als schaltbare Halbwellenplatte. Die Flüssigkristallschicht kann einen ersten Zustand aufweisen, in dem sie die Polarisation des Lichts nicht verändert, und einen zweiten Zustand, in dem sie die Polarisation des Lichts umkehrt (z.B. von rechtszirkular zu linkszirkular oder umgekehrt). Das Polarisationsgitter kann eingerichtet sein, den Ablenkungswinkel des Lichts basierend auf dessen Polarisation zu definieren.

Der Winkelsteuercontroller 204 kann derart eingerichtet sein, dass er ein erstes Steuersignal (z.B. eine erste Steuerspannung, beispielsweise 0 V) zu der Flüssigkristallschicht in einer ersten Winkelsteuerzeitperiode bereitstellt, um eine erste Polarisation des durch die Flüssigkristallschicht propagierenden Lichts zu definieren (anders ausgedrückt, um die Flüssigkristallschicht in den ersten Zustand zu bringen). Der Winkelsteuercontroller 204 kann derart eingerichtet sein, dass er ein zweites Steuersignal(z.B. eine zweite Steuerspannung, beispielsweise größer als die erste Steuerspannung) zu der Flüssigkristallschicht in einer zweiten Winkelsteuerzeitperiode bereitstellt, um eine zweite Polarisation des durch die Flüssigkristallschicht propagierenden Lichts zu definieren (anders ausgedrückt, um die Flüssigkristallschicht in den zweiten Zustand zu bringen).

Das Polarisationsgitter kann somit einen ersten Ablenkungswinkel für das Licht in der ersten Winkelsteuerzeitperiode basierend auf der ersten Polarisation bereitstellen und einen zweiten Ablenkungswinkel für das Licht in der zweiten Winkelsteuerzeitperiode basierend auf der zweiten Polarisation bereitstellen.

Gemäß verschiedenen Ausführungsformen kann das Grobwinkelsteuerelement 200 eine Mehrzahl von Flüssigkristallschichten und/oder eine Mehrzahl von Polarisationsgittern aufweisen (z.B. gestapelt oder laminiert, einer nach dem anderen), um den Bereich von möglichen Ablenkungswinkeln zu vergrößern (in ähnlicher Weise wie für das Flüssigkristall-Polarisationsgitter oben beschrieben wurde).

Die Anzahl und die horizontale wie vertikale Winkelausdehnung (auch als Winkelbereich gekennzeichnet) der Kacheln können durch das Design des Flüssigkristallelements gewählt werden. Die Anzahl der Kacheln kann proportional zur Anzahl der Flüssigkristall-Schichten sein, z.B. zur Anzahl der steuerbaren (schaltbaren) Schichten. Nur als numerisches Beispiel kann ein Flüssigkristallelement derart eingerichtet sein, dass es mehr als 20 Kacheln, z.B. mehr als 30 Kacheln, z.B. mehr als 50 Kacheln, zur Verfügung stellt. Die maximale Anzahl von Kacheln kann durch die Schaltzeit des Flüssigkristallelements (z.B. der Flüssigkristall-Polarisationsgitter-Schaltzeiten) begrenzt sein.

**Fig. 3A** bis **Fig. 3C** zeigen jeweils eine Lichtquelle 300 in einer schematischen Darstellung, gemäß verschiedenen Ausführungsformen. Die Lichtquelle 300 kann eine Lichtquelle für ein LIDAR-System sein, z.B. kann die Lichtquelle 110 des LIDAR-Systems 100 sein.

Die Lichtquelle 300 kann eine Mehrzahl von Teillichtquellen 302 aufweisen (z.B. die Teillichtquellen 112 des LIDAR-Systems 100). Die Teillichtquellen 302 der Mehrzahl von Teillichtquellen 302 können in einer Richtung angeordnet sein (z.B. nebeneinander).

Die Teillichtquellen 302 können in der vertikalen Richtung angeordnet sein (siehe Fig. 3A) oder in der horizontalen Richtung angeordnet sein (siehe Fig. 3B). In verschiedenen Aspekten können die Teillichtquellen 302 in einer Richtung angeordnet sein, welche mit einer optischen Achse der Lichtquelle 300 (z.B. mit einer optischen Achse eines LIDAR-Systems) einen Winkel anders als 90° bildet. Wie beispielhaft in Fig. 3C dargestellt ist, können die Teillichtquellen 302 in einer Richtung 45° zur optischen Achse angeordnet sein.

Die Mehrzahl von Teillichtquellen 302 kann eine beliebige Anzahl von Teillichtquellen 302 aufweisen, beispielsweise 8 Teillichtquellen, 16 Teillichtquellen oder 32 Teillichtquellen. Die Anzahl von Teillichtquellen 302 kann eine Auflösung in der Richtung bestimmen, in der die Teillichtquellen 302 angeordnet sind. Als Beispiel, in einem Fall, dass acht Teillichtquellen 302 in vertikaler Richtung angeordnet sind, kann ein Abschnitt 304 eines Sichtfelds (wie beispielsweise in **Fig. 3D** gezeigt ist), in das die Teillichtquellen 302 Licht emittieren, acht Teilabschnitte 306 aufweisen. Jeder Teilabschnitt 306 kann von einer jeweiligen Lichtquelle 302 beleuchtet werden. Falls der Abschnitt 304 eine Winkelausdehnung von 15° in horizontaler Richtung und 2.5° in vertikaler Richtung aufweist, kann jede Teillichtquelle 302 einen Teilabschnitt 306 beleuchten, der eine Winkelausdehnung von 15° in horizontaler Richtung und 0,31° in vertikaler Richtung aufweist. Anschaulich kann jede Teillichtquelle 302 einen Abschnitt 304 vollständig beleuchten, in die Richtung senkrecht zu der Richtung, in der die Teillichtquellen 302 angeordnet sind. Jede Teillichtquelle 302 kann einen Teilabschnitt 306 in die Richtung beleuchten, in der die Teillichtquellen 302 angeordnet sind.

Ein Teilabschnitt 306 kann anschaulich als ein Pixel verstanden werden, welches von einer jeweiligen Teillichtquelle 302 beleuchtet wird. Falls das Sichtfeld in vertikaler Richtung in 8 Kacheln unterteilt ist und jede Kachel in 8 Teilabschnitten 306 unterteilt ist, können 64 Pixel angegeben werden, nur als numerisches Beispiel.

Die Lichtquelle 300 (z.B. mindestens eine Teillichtquelle 302, z.B. jede Teillichtquelle 302) kann eingerichtet sein, Licht in dem sichtbaren und/oder infraroten Wellenlängenbereich zu emittieren. Beispielsweise kann die Lichtquelle 300 eingerichtet sein, Licht in dem Wellenlängenbereich von ungefähr 700 nm bis ungefähr 2000 nm, beispielsweise bei 905 nm oder bei 1550 nm.

Die Lichtquelle 300 kann mindestens eine Laserlichtquelle aufweisen. Beispielsweise können die Teillichtquellen 302 mindestens eine Laserlichtquelle (z.B. jede Teillichtquelle kann eine Laserlichtquelle sein oder aufweisen).

Die mindestens eine Laserlichtquelle kann eine Laserdiode aufweisen. Als Beispiel kann die mindestens eine Laserdiode eine kantenemittierende Laserdiode oder eine Bauteilseite Licht emittierende Diode sein.

Die Lichtquelle 300 (z.B. die mindestens eine Laserlichtquelle) kann einen Laserbarren aufweisen. Anschaulich können die Teillichtquellen 302 Laserdioden des Laserbarrens sein. Beispielsweise kann eine schnelle Achse des Laserbarrens entlang der Richtung ausgerichtet sein, in welcher die Teillichtquellen 302 angeordnet sind. Nur als numerisches Beispiel kann der Laserbarren eine aktive Fläche aufweisen, welche eine Größe von 0.1 mm in horizontaler Richtung und von 0.48 mm in vertikaler Richtung aufweist.

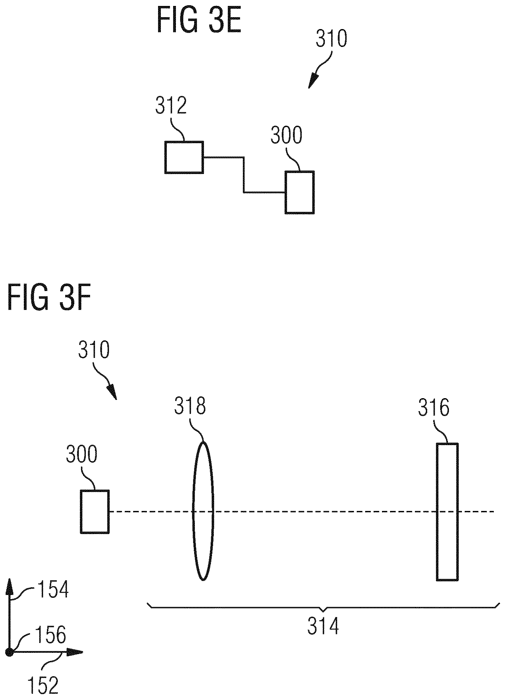

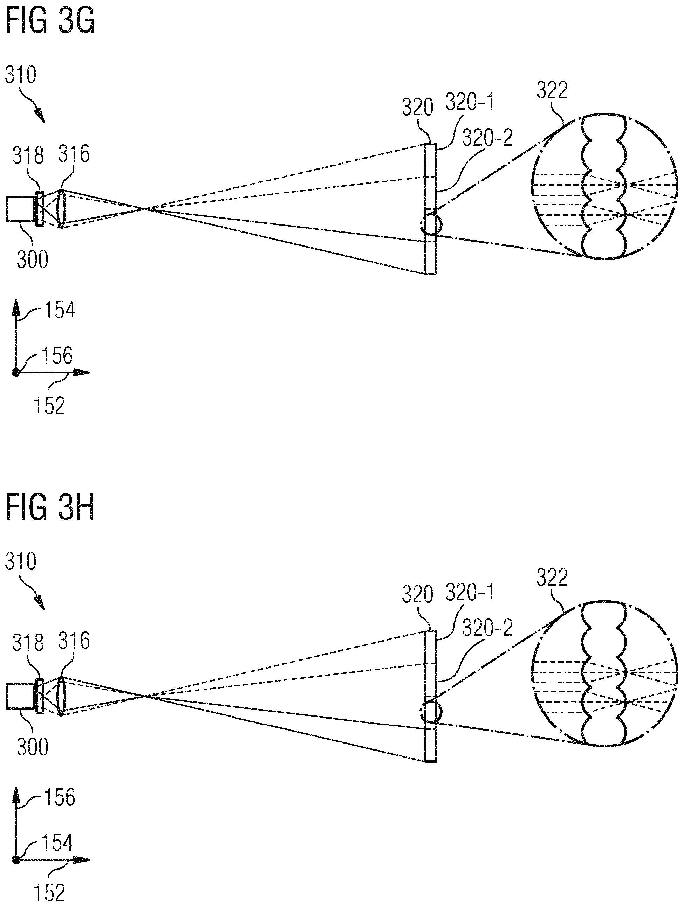

Die Lichtquelle 300 kann Teil eines Lichtemissionssystems 310 sein, wie in **Fig. 3E, Fig. 3F****,** **Fig. 3G** und **Fig. 3H** dargestellt ist (z.B. das Lichtemissionssystem 310 kann ein Lichtemissionssystem des LIDAR-System 100 sein).

Das Lichtemissionssystem 310 kann einen Lichtemissionscontroller 312 aufweisen, um die Lichtquelle 300 (z.B. die Mehrzahl von Teillichtquellen 302) zu steuern. Der Lichtemissionscontroller 312 kann ein Beispiel für den Lichtemissionscontroller 118 des LIDAR-Systems 100 sein.

Der Lichtemissionscontroller 312 kann derart eingerichtet sein, dass er die Mehrzahl von Teillichtquellen 302 derart steuert, dass die Teillichtquellen 302 nacheinander Licht emittieren (z. B. jede in einer jeweiligen Emissionszeitperiode). Anschaulich kann die Betriebsweise so sein, dass immer nur eine einzelne Teillichtquelle 302 (z.B. eine einzelne Laserdiode) pulst und einen Streifen (z.B. einen Teilabschnitt, beispielsweise in der horizontalen Richtung) beleuchtet. Die Ortsauflösung innerhalb dieses Streifens übernimmt dann einen Detektor (z.B. eine Detektorzeile), wie in Bezug auf Fig. 4A bis Fig. 4E noch näher erläutert wird.

Der Lichtemissionscontroller 312 kann eingerichtet sein, eine erste Teillichtquelle und eine zweite Teillichtquelle derart zu steuern, dass die erste Teillichtquelle Licht in einer ersten Emissionszeitperiode (z.B. der ersten Teillichtquelle zugeordnet) aussendet und die zweite Teillichtquelle Licht in einer zweiten Emissionszeitperiode (z.B. der zweiten Teillichtquelle zugeordnet) aussendet. Die zweite Emissionszeitperiode kann der ersten Emissionszeitperiode folgen (z.B. sofort nach der ersten Emissionszeitperiode, ohne weitere Emissionszeitperioden dazwischen).

Der Lichtemissionscontroller 312 kann derart eingerichtet sein, dass er eine Wartezeit abwartet, nachdem eine Teillichtquelle 302 Licht ausgesandt hat, bevor er die nächste Teillichtquelle 302 zum Aussenden von Licht steuert (z.B. nachdem die erste Teillichtquelle Licht ausgesandt hat, bevor er die zweite Teillichtquelle zum Aussenden von Licht steuert). Die Wartezeit zwischen aufeinanderfolgenden Emissionszeitperioden (z.B. zwischen der ersten Emissionszeitperiode und der zweiten Emissionszeitperiode) kann gleich oder größer als eine maximale Laufzeit des ausgesendeten Lichts sein (z.B. als eine maximale Laufzeit eines LIDAR-Systems sein, in dem das Lichtemissionssystem enthalten ist, wie beispielswies des LIDAR-Systems 100).

Die maximale Laufzeit kann als 2*dₘₐₓ/c berechnet werden, wobei dₘₐₓ die maximale Reichweite des LIDAR-Systems ist (in verschiedenen Aspekten eine maximale Entfernung vom System, in der sich ein Objekt befinden und noch erkannt werden kann) und c die Lichtgeschwindigkeit ist. Als numerisches Beispiel kann eine Wartezeit größer als 100 ns sein, beispielsweise größer als 1 µs, beispielsweise größer als 2 µs (entsprechend einer maximalen Reichweite von etwa 300 m). Dies kann dazu führen, dass ein Detektor des LIDAR-Systems (z.B. der Detektor 104 des LIDAR-Systems 100) unterscheiden kann, welcher Impuls empfangen wird.

Der Lichtemissionscontroller 312 kann eingerichtet sein, die Teillichtquellen 302 in Übereinstimmung mit einem Winkelsteuercontroller eines LIDAR-Systems (z.B. dem Winkelsteuercontroller 204) zu steuern.

Der Lichtemissionscontroller 312 kann eingerichtet sein, die Teillichtquellen 302 derart zu steuern, dass jede Teillichtquelle 302 für jeden Ablenkungswinkel Licht aussendet, welcher von einem Grobwinkelsteuerelements (z.B. von dem Grobwinkelsteuerelement 118) des LIDAR-Systems bereitgestellt wird. Beispielsweise kann jede Teillichtquelle 302 gesteuert werden, Licht in einer vom Winkelsteuercontroller definierten Winkelsteuerzeitperiode zu emittieren. Als ein Beispiel kann der Lichtemissionscontroller 312 eingerichtet sein, die Teillichtquellen 302 derart zu steuern, dass jede Teillichtquelle 302 Licht in der jeweiligen Emissionszeitperiode innerhalb einer ersten Winkelsteuerzeitperiode aussendet, und dass jede Teillichtquelle 302 Licht in der jeweiligen Emissionszeitperiode innerhalb einer zweiten Winkelsteuerzeitperiode aussendet.

Das Lichtemissionssystem 310 kann eine optische Anordnung (z.B. eine Aussendungsoptikanordnung 314) aufweisen, wie in **Fig. 3F** bis **Fig. 3H** dargestellt ist. Die Aussendungsoptikanordnung 314 kann stromabwärts der Lichtquelle 300 angeordnet sein, z.B. zwischen der Lichtquelle 300 und dem Sichtfeld. Beispielsweise kann die Aussendungsoptikanordnung 314 wischen der Lichtquelle 300 und einem Grobwinkelsteuerelement (z.B. dem Grobwinkelsteuerelement 118) angeordnet sein, um Licht von der Lichtquelle 300 zum Grobwinkelsteuerelement zu richten (z.B. zu fokussieren oder zu kollimieren). Die Aussendungsoptikanordnung 314 kann eine oder mehrere Linsen aufweisen, z.B. eine oder mehrere Kollimatorlinsen (auch als Kollimationslinsen gekennzeichnet).

Die Aussendungsoptikanordnung 314 kann eine erste Kollimatorlinse 316 (z.B. eine erste Zylinderlinse) aufweisen, um das von der Lichtquelle 300 emittierte Licht auf ein Sichtfeld zu kollimieren (z.B. auf ein Grobwinkelsteuerelement). Beispielsweise kann die erste Kollimatorlinse 316 eine "langsame Achse-Kollimatorlinse", um das emittierte Licht in Richtung der langsamen Achse der Lichtquelle 300 zu kollimieren. Als numerisches Beispiel kann die erste Kollimatorlinse 316 eine Brennweite von ungefähr 44 mm haben.

Die erste Kollimatorlinse 316 kann das Licht derart kollimieren, dass das kollimierte Licht nur einen Teilabschnitt einer Kachel des Sichtfeldes in der Richtung ausfüllt, in der das Licht durch die erste Kollimatorlinse 316 kollimiert wird. Beispielsweise kann die erste Kollimatorlinse 316 die Strahlaufweitung auf den benötigten (z.B. horizontalen) Winkel (z.B. 7.5°) reduzieren.

Die Aussendungsoptikanordnung 314 kann eine zweite Kollimatorlinse 318 (z.B. eine zweite Zylinderlinse) aufweisen. Die zweite Kollimatorlinse 318 kann zwischen der Lichtquelle 300 und der ersten Kollimatorlinse 316 angeordnet sein, um das von der Lichtquelle 300 emittierte Licht auf die erste Kollimatorlinse 316 zu kollimieren. Beispielsweise kann die zweite Kollimatorlinse 318 eine "schnelle Achse-Kollimatorlinse", um das emittierte Licht in Richtung der schnellen Achse der Lichtquelle 300 zu kollimieren. Die zweite Kollimatorlinse 318 kann für die Strahlformung eingerichtet sein. Als numerisches Beispiel kann die zweite Kollimatorlinse 318 eine Brennweite von ungefähr 38 µm aufweisen.

Es versteht sich, dass die Brennweite der ersten Kollimatorlinse 316 und der zweiten Kollimatorlinse 318 entsprechend der Größe der Lichtquelle 300, z.B. der Breite der aktiven Fläche eines Laserbarrens, gewählt (z.B. angepasst) werden kann.

Die Aussendungsoptikanordnung 314 kann ein Multilinsen-Array 320 aufweisen, wie in Fig. 3G (für Teillichtquellen, wie beispielsweise vier Laserdioden, angeordnet in der vertikalen Richtung) und in Fig. 3H (für Teillichtquellen angeordnet in der horizontalen Richtung) dargestellt ist. Das Multilinsen-Array kann eingerichtet sein, das von jeder Teillichtquelle der Mehrzahl von Teillichtquellen emittierte Licht zu mischen. Das Multilinsen-Array 320 kann stromabwärts der ersten Kollimatorlinse 316 angeordnet sein, z.B. zwischen der ersten Kollimatorlinse 316 und einem Grobwinkelsteuerelement (z.B. dem Grobwinkelsteuerelement 118).

Das Multilinsen-Array 320 kann eine Zonenstruktur (wie in Einfügung 322 dargestellt ist) aufweisen, z.B. eine Mehrzahl von Zonen (beispielsweise eine erste Zone 320-1 und eine zweite Zone 320-2). Das Multilinsen-Array 320 kann eine starke (mit anderen Worten, scharfe) Trennung des von den Teillichtquellen 302 emittierten Lichts bewirken. Die Zonenstruktur kann in der Richtung angeordnet werden, in der die Mehrzahl von Teillichtquellen 302 angeordnet sind (z.B. in vertikaler Richtung in Fig. 3G oder in horizontaler Richtung in Fig. 3H). Das Multilinsen-Array 320 kann eine Erhöhung der virtuellen Quellengröße bewirken und somit eine erhöhte Augensicherheit bieten, zum Beispiel bei der Abstrahlung von Licht im Infrarotbereich.

**Fig. 4A** bis **Fig. 4C** zeigen jeweils einen Detektor 400 in einer schematischen Darstellung. Der Detektor 400 kann ein Detektor für ein LIDAR-System sein, z.B. kann der Detektor 104 des LIDAR-Systems 100 sein. Der Detektor 400 kann eingerichtet sein, Licht aus einem Sichtfeld (z.B. aus dem Sichtfeld des LIDAR-Systems) zu detektieren. Der Detektor 400 kann eine Mehrzahl von Detektorpixeln 402 aufweisen (z.B. die Detektorpixeln 106 des LIDAR-Systems 100). Die Detektorpixeln 402 der Mehrzahl von Detektorpixeln 402 können in einer Richtung angeordnet sein (z.B. nebeneinander).

Die Detektorpixeln 402 können in der horizontalen Richtung angeordnet sein (siehe Fig. 4A) oder in der vertikalen Richtung angeordnet sein (siehe Fig. 4B). Die Detektorpixeln 402 können in einer Richtung angeordnet sein, welche mit einer optischen Achse des Detektors 400 (z.B. mit einer optischen Achse eines LIDAR-Systems) einen Winkel anders als 90° bildet. Wie beispielhaft in Fig. 4C dargestellt ist, können die Detektorpixel 402 in einer Richtung 45° zur optischen Achse angeordnet sein. Die Mehrzahl von Detektorpixeln 402 kann eine beliebige Anzahl von Detektorpixeln 402 aufweisen, beispielsweise 64 Detektorpixeln oder 128 Detektorpixeln.

Die Größe des Detektors 400 kann der Größe einer Kachel 404 des Sichtfeldes entsprechen (wie beispielsweise in **Fig. 4D** gezeigt ist), von dem der Detektor 400 Licht detektiert. Nur als numerisches Beispiel kann der Detektor 400 (z.B. ein 1x64 Pixel APD-Array) Abmessungen von 2,5 mm x 15 mm aufweisen, welche einer Kachel 404 (auch als Zelle gekennzeichnet) mit Große 15° horizontal x 2,5° vertikal entsprechen. Anschaulich kann der Detektor 400 dasselbe Aspekt-Verhältnis wie eine Kachel 404 (z.B. wie eine LCPG-Zelle) aufweisen.

Die Anzahl von Detektorpixeln 402 kann eine Auflösung in der Richtung bestimmen, in der die Detektorpixeln 402 angeordnet sind. Als numerisches Beispiel, in einem Fall, dass 64 Detektorpixel 402 in horizontaler Richtung angeordnet sind (z.B. in einem 64-Pixel-APD-Array), kann jedes Detektorpixel 402 1/64 der 15° breiten Kachel 404 horizontal und vertikal die gesamten 2.5° der Kachel 404 abbilden. Anschaulich kann jedes Detektorpixel 402 Licht von einem Teilabschnitt 406 der Kachel 404 detektieren. Eine horizontale Auflösung von ungefähr 0.23° kann in dieser Konfiguration erreicht werden. Die Auflösung lässt sich vergrößern, wenn 128 Detektorpixel 402 verwendet werden (z.B. in einem 128-Pixel-APD-Array).

Der Detektor 400 kann eine Mehrzahl von Detektoren (z.B. von Teildetektoren) aufweisen. Beispielsweise können mehrere Detektoren verwendet werden, um Licht aus dem Sichtfeld zu detektieren. Die Detektoren können nebeneinander angeordnet sein, z.B. kann jeder Detektor einer jeweiligen Spalte oder Zeile des Sichtfeldes zugeordnet sein (um Licht aus der jeweiligen Spalte oder Zeile zu detektieren). Nur als Beispiel kann der Detektor 400 sieben Detektoren aufweisen, wobei jeder Detektor 64 Detektorpixel aufweist, so dass 448 Pixel für das Detektieren des Lichts (in horizontaler oder vertikaler Richtung) verwendet werden können.

Der Detektor 400 (z.B. die Detektorpixel 402) kann mindestens eine Fotodiode aufweisen. Beispielsweise kann mindestens ein (z.B. jedes) Detektorpixel 402 eine Fotodiode aufweisen oder mit einer jeweiligen Fotodiode gekoppelt sein. Beispielsweise kann die mindestens eine Fotodiode eine Lawinenfotodiode sein, z.B. eine Einzelphotonen-Lawinenfotodiode. Beispielsweise kann der Detektor 400 eine APD Zeile oder eine SPAD Zeile sein oder aufweisen. Anschaulich kann der Detektor 400 eine Multipixel-Einzelphotonen-Lawinenfotodiode sein oder aufweisen.

Eine Empfängeroptikanordnung 408 kann verwendet werden, um das Sichtfeld auf den Detektor 400 abzubilden, wie in **Fig. 4E** dargestellt ist. Die Empfängeroptik kann dabei so gestaltet sein, dass das gesamte Sichtfeld auf den Detektor 400 (z.B. auf die APD Zeile) abgebildet wird. Beispielsweise kann die Empfängeroptikanordnung 408 derart eingerichtet sein, dass sie einen jeweiligen Teilabschnitt des Sichtfeldes auf ein Detektorpixel 402 (z.B. dem Teilabschnitt zugeordnet) abbildet. Beispielsweise kann die Empfängeroptikanordnung 408 zwischen dem Detektor 400 und einem Grobwinkelsteuerelement eines LIDAR-Systems (z.B. dem Grobwinkelsteuerelement 118) angeordnet sein. Die Empfängeroptikanordnung 408 kann ein oder mehrere Linsen aufweisen (z.B. ein oder mehrere Fokussierungslinsen). In der beispielhaften Konfiguration in Fig. 4E kann die Empfängeroptikanordnung 408 eine Linse 410 aufweisen, um Licht auf den Detektor 400 zu fokussieren (z.B. in vertikaler und horizontaler Richtung). Die Linse 410 kann eine gleiche Brennweite in horizontalter und vertikaler Richtung aufweisen, beispielsweise von 57 mm.

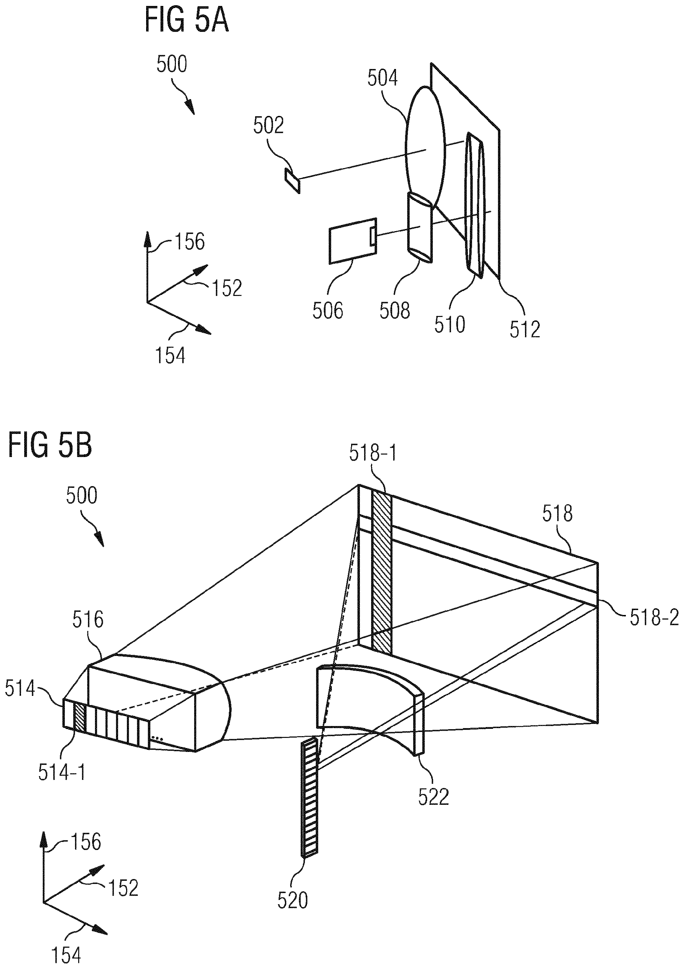

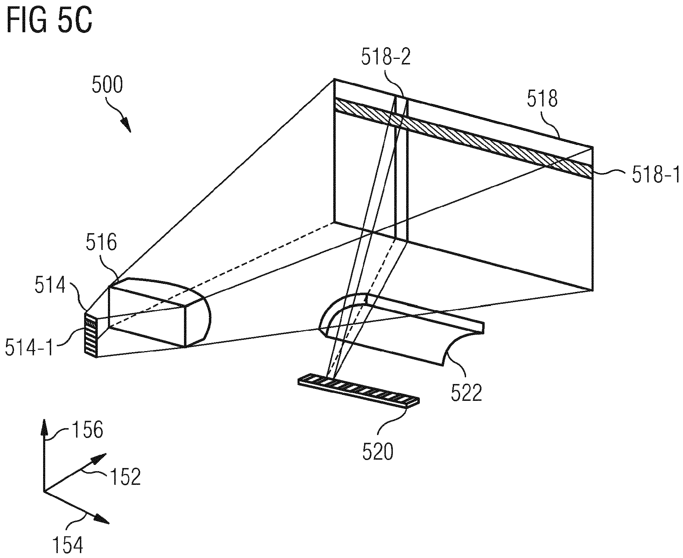

**Fig. 5A, Fig. 5B** und **Fig. 5C** zeigen jeweils ein LIDAR-System 500 in einer schematischen Darstellung. Das LIDAR-System 500 kann eine beispielhafte Implementierung des LIDAR-Systems 100 sein. In den Fig. 5B und Fig. 5C ist auf der Emitterseite nur ein optisches Element (z.B. ein Multi-Linsen Array) dargestellt, es versteht sich jedoch, dass auch weitere optische Elemente vorhanden sein können (z.B. eine langsame-Achse Kollimatorlinse und/oder eine schnelle-Achse Kollimatorlinse).

In der beispielhaften Konfiguration in Fig. 5A kann das LIDAR-System 500 auf der Empfängerseite einen Detektor 502 aufweisen. Der Detektor kann beispielsweise 64 Detektorpixel (z.B. 64 Kanäle) aufweisen, welche in horizontaler Richtung angeordnet sind, z.B. ein Array mit 64 Lawinen-Photodioden. Das LIDAR-System 500 kann ferner auf der Empfängerseite eine Empfängeroptik 504 enthalten, z.B. eine Linse (z.B. eine Fokussierlinse), um Licht auf den Detektor 502 zu richten (z.B. zu fokussieren). Das LIDAR-System 500 kann auf der Emitterseite ein Lasermodul 506 aufweisen, z.B. einen Laserbarren mit 8 in vertikaler Richtung angeordneten Laserdioden. Das LIDAR-System 500 kann eine Aussendungsoptik aufweisen, um das vom Lasermodul 506 emittierte Licht zu kollimieren. Beispielsweise kann das LIDAR-System 500 eine erste Kollimatorlinse 508 (z.B. eine schnelle Achse Kollimatorlinse) und eine zweite Kollimatorlinse 510 (z.B. eine langsame Achse Kollimatorlinse) aufweisen. Das LIDAR-System 500 kann auf der Winkelsteuerstufe ein Grobwinkelsteuerelement 512, z.B. ein Flüssigkristall-Polarisationsgitter, aufweisen. Das Flüssigkristall-Polarisationsgitter kann, nur als numerisches Beispiel, eine Größe in horizontaler Richtung (z.B. eine Breite) von ungefähr 50 mm und eine Größe in vertikaler Richtung (z.B. eine Höhe) von ungefähr 50 mm aufweisen.

In der beispielhaften Konfiguration in Fig. 5B kann das LIDAR-System 500 auf der Empfängerseite einen Detektor 514 aufweisen, z.B. eine 1D Detektor Zeile mit 32 oder 64 Detektorpixeln (z.B. 32 oder 64 Lawinen-Photodioden), welche in horizontaler Richtung angeordnet sind. Das LIDAR-System 500 kann ferner auf der Empfängerseite eine Empfängeroptik 516 enthalten, um Licht auf den Detektor 514 zu richten. Die Empfängeroptik 516 kann derart eingerichtet sein, dass Licht von einer Kachel 518 (z.B. einer LCPG-Kachel) auf den Detektor 514 abgebildet ist. Die Teilabschnitte der Kachel 518 (welche entlang der horizontalen Richtung angeordnet sind) werden durch die Empfängeroptik 516 auf den jeweiligen Detektorpixeln abgebildet. Beispielsweise kann der gestreifte Teilabschnitt 518-1 auf das gestreifte Detektorpixel 514-1 (z.B. auf die APD-Zelle) abgebildet werden. Die Kachel 518 kann beispielsweise eine Winkelausdehnung von 7.5° in horizontaler Richtung und von 4° in vertikaler Richtung. Das LIDAR-System 500 kann auf der Emitterseite ein Lasermodul 520 aufweisen, z.B. einen Laserbarren (z.B. eine 1D Emitter Spalte) mit 16 in vertikaler Richtung angeordneten Laserdioden (z.B. einen 16-fach Laserbarren). Das LIDAR-System 500 kann ein Multi-Linsen Array 522 aufweisen, um das vom Lasermodul 520 emittierte Licht in das Sichtfeld zu richten. Das Multi-Linsen Array 522 kann derart eingerichtet sein, dass Licht von jeder Laserdiode des Lasermoduls 520 einen jeweiligen Teilabschnitt der Kachel 518 (von den Teilabschnitten, die entlang der vertikalen Richtung angeordnet sind) beleuchtet (z.B. den Teilabschnitt 518-2).

Das LIDAR-System 500 in Fig. 5C kann dieselbe Komponente des Systems in Fig. 5B aufweisen, in einer umgekehrten Konfiguration. In der Konfiguration in Fig. 5C kann der Detektor 514 Detektorpixel aufweisen, welche in der vertikalen Richtung angeordnet sind. Das Lasermodul 520 (und das Multi-Linsen Array 522) kann in der horizontalen Richtung angeordnet sein. Die Anordnung der Teilabschnitte der Kachel 518 kann entsprechend umgekehrt sein. Die Kachel 518 kann beispielsweise eine Winkelausdehnung von 4° in horizontaler Richtung und von 6° in vertikaler Richtung.

Das LIDAR-System 500 kann auf der Emitterseite ferner eine langsame-Achse Kollimatorlinse und eine schnelle-Achse Kollimatorlinse, beispielsweise angeordnet wie in FIG. 3G, FIG.3H, und FIG.5A dargestellt ist, welche der Übersichtlichkeit halber in der Fig. 5B und Fig.5C nicht gezeigt sind.

**BEZUGSZEICHENLISTE**

| | |
|---|---|
| LIDAR-System | 100 |
| Sichtfeld | 102 |
| Detektor | 104 |
| Detektorpixel | 106 |
| Optische Achse | 108 |
| Lichtquelle | 110 |
| Teillichtquelle | 112 |
| Grobwinkelsteuerelement | 114 |
| Kachel | 116 |
| erste Kachel | 116-1 |
| zweite Kachel | 116-2 |
| Lichtemissionscontroller | 118 |
| Richtung | 152 |
| Richtung | 154 |
| Richtung | 156 |
| Grobwinkelsteuerelement | 200 |
| Sichtfeld | 202 |
| erste Kachel | 202-1 |
| zweite Kachel | 202-2 |
| Winkelsteuercontroller | 204 |
| Lichtquelle | 300 |
| Teillichtquelle | 302 |
| Sichtfeldkachel | 304 |
| Teilabschnitt | 306 |
| Lichtemissionssystem | 310 |
| Lichtemissionscontroller | 312 |
| Aussendungsoptikanordnung | 314 |
| Kollimatorlinse | 316 |
| Kollimatorlinse | 318 |
| Multi-Linsen Array | 320 |
| Zone | 320-1 |
| Zone | 320-2 |
| Einfügung | 322 |
| Detektor | 400 |
| Detektorpixel | 402 |
| Sichtfeldkachel | 404 |
| Teilabschnitt | 406 |
| Empfängeroptikanordnung | 408 |
| Linse | 410 |
| LIDAR-System | 500 |
| Detektor | 502 |
| Empfängeroptik | 504 |
| Lasermodul | 506 |
| Kollimatorlinse | 508 |
| Kollimatorlinse | 510 |
| Grobwinkelsteuerelement | 512 |
| Detektor | 514 |
| Detektorpixel | 514-1 |
| Empfängeroptik | 516 |
| Kachel | 518 |
| Teilabschnitt | 518-1 |
| Teilabschnitt | 518-2 |
| Laserbarren | 520 |
| Multi-Linsen Array | 522 |
| Steuersignal | S1 |
| Steuersignal | S2 |

## Patentansprüche

1. LIDAR-System (100) aufweisend:
• einen Detektor (104), welcher derart eingerichtet ist, dass er Licht aus einem Sichtfeld (102) detektiert,
• eine Lichtquelle (110) aufweisend eine Mehrzahl von Teillichtquellen (112), welche derart eingerichtet sind, dass sie Licht in das Sichtfeld (102) aussenden,
• ein Grobwinkelsteuerelement (114), welches derart eingerichtet ist, dass es Licht aus der Lichtquelle (110) zu dem Sichtfeld ablenkt und dass es Licht aus dem Sichtfeld (102) zu dem Detektor (104) ablenkt, und
• einen Lichtemissionscontroller (118), welcher eingerichtet ist, die Teillichtquellen (112) der Mehrzahl von Teillichtquellen (112) derart zu steuern, dass jede Teillichtquelle (112) der Mehrzahl von Teillichtquellen (112) Licht in einer jeweiligen Emissionszeitperiode aussendet, **dadurch gekennzeichnet**, das
das Grobwinkelsteuerelement (114) ferner dazu eingerichtet ist, eine Winkelausdehnung einer Kachel als Teilabschnitt des Sichtfeldes zu bestimmen,
• der Detektor (104) eine Mehrzahl von Detektorpixeln (106) aufweist, welche entlang einer ersten Richtung angeordnet sind, wobei eine erste räumliche Auflösung in der ersten Richtung von der Winkelausdehnung der Kachel (116) entlang der ersten Richtung und von der Anzahl von Detektorpixeln (106), welche entlang der ersten Richtung angeordnet sind, abhängt,
• wobei jedes Detektorpixel (106) der Mehrzahl von Detektorpixeln (106) einem jeweiligen Teilabschnitt des Sichtfeldes (102) zugeordnet ist,
• wobei die Teillichtquellen (112) der Mehrzahl von Teillichtquellen (112) entlang einer zweiten Richtung in einem Winkel zu der ersten Richtung angeordnet sind, wobei eine zweite räumliche Auflösung in der zweiten Richtung von der Winkelausdehnung der Kachel (116) entlang der zweiten Richtung und von der Anzahl von Teillichtquellen (112), welche entlang der zweiten Richtung angeordnet sind, abhängt, und
• wobei jede Teillichtquelle (112) der Mehrzahl von Teillichtquellen (112) einem jeweiligen Teilabschnitt des Sichtfeldes (102) zugeordnet ist.

2. LIDAR-System (100) gemäß Anspruch 1, wobei die zweite Richtung senkrecht zu der ersten Richtung ist.

3. LIDAR-System (100) gemäß Anspruch 1 oder 2, wobei das Grobwinkelsteuerelement (114) derart eingerichtet ist, dass es Licht aus der Lichtquelle (110) unter einem ersten Ablenkungswinkel ablenkt, um einen Abschnitt des Sichtfeldes (102) zu beleuchten, und wobei das Grobwinkelsteuerelement (114) derart eingerichtet ist, dass es Licht aus dem Sichtfeld (102) unter einem zweiten Ablenkungswinkel ablenkt, um Licht von einem Abschnitt des Sichtfeldes (102) auf den Detektor (104) abzulenken.

4. LIDAR-System (100) gemäß einem der Ansprüche 1 bis 3, wobei die Mehrzahl von Teillichtquellen (112) eine erste Teillichtquelle und eine zweite Teillichtquelle aufweist, und
wobei der Lichtemissionscontroller (118) eingerichtet ist, die erste Teillichtquelle und die zweite Teillichtquelle derart zu steuern, dass die erste Teillichtquelle Licht in einer ersten Emissionszeitperiode aussendet und die zweite Teillichtquelle Licht in einer zweiten Emissionszeitperiode aussendet,
wobei eine Wartezeit zwischen der ersten Emissionszeitperiode und der zweiten Emissionszeitperiode größer als oder gleich wie eine maximale Laufzeit des ausgesendeten Lichts ist.

5. LIDAR-System (100) gemäß einem der Ansprüche 1 bis 4, ferner aufweisend:
einen Winkelsteuercontroller (204), welcher eingerichtet ist, eine oder mehrere Lichtumlenkungseigenschaften des Grobwinkelsteuerelements (114) zu steuern, um einen Ablenkungswinkel des abgelenkten Lichts zu definieren.

6. LIDAR-System (100) gemäß Anspruch 5,
wobei das Grobwinkelsteuerelement (114) ein Flüssigkristall-Polarisationsgitter ist oder aufweist,
wobei der Winkelsteuercontroller (204) derart eingerichtet ist, dass er ein Steuersignal zu dem Flüssigkristall-Polarisationsgitter bereitstellt, um eine Ausrichtung der Flüssigkristallmoleküle zu steuern, wobei die Ausrichtung der Flüssigkristallmoleküle eine Gitterperiode des Flüssigkristall-Polarisationsgitters definiert.

7. LIDAR-System (100) gemäß Anspruch 5,
wobei das Grobwinkelsteuerelement (114) eine Flüssigkristallschicht und ein Polarisationsgitter aufweist,
wobei der Winkelsteuercontroller (204) derart eingerichtet ist, dass er ein Steuersignal zu der Flüssigkristallschicht bereitstellt, um eine Ausrichtung der Flüssigkristallmoleküle der Flüssigkristallschicht zu steuern, wobei die Ausrichtung der Flüssigkristallmoleküle die Polarisation des durch die Flüssigkristallschicht propagierenden Lichts definiert.

8. LIDAR-System (100) gemäß einem der Ansprüche 1 bis 7,
wobei die Lichtquelle (110) mindestens eine Laserlichtquelle aufweist.

9. LIDAR-System (100) gemäß einem der Ansprüche 1 bis 8,
wobei der Detektor (104) mindestens eine Fotodiode aufweist, welche derart eingerichtet ist, dass sie ein elektrisches Signal erzeugt, wenn Licht auf die mindestens eine Fotodiode auftrifft.

10. LIDAR-System (100) gemäß einem der Ansprüche 1 bis 9, ferner aufweisend:
eine Empfängeroptikanordnung (408), welche eingerichtet ist, Licht aus dem Sichtfeld zu empfangen und das empfangene Licht auf den Detektor (104) zu richten.

11. LIDAR-System (100) gemäß einem der Ansprüche 1 bis 10, ferner aufweisend: eine Aussendungsoptikanordnung (314) eingerichtet, Licht aus der Lichtquelle (110) zu empfangen und das empfangene Licht auf das Grobwinkelsteuerelement (114) zu richten.

12. LIDAR-System (100) gemäß dem Anspruch 11, wobei die Aussendungsoptikanordnung (314) ein Multilinsen Array aufweist zum Mischen des von jeder Teillichtquelle der Mehrzahl von Teillichtquellen emittierten Lichts.

13. LIDAR-System (100) gemäß einem der Ansprüche 1 bis 12, wobei eine Kachel (116) an einem Rand des Sichtfeldes (102) entlang der ersten Richtung eine größere Größe hat, als eine Kachel (116) in der Mitte des Sichtfeldes (102) entlang der ersten Richtung.

14. LIDAR-System (100) gemäß einem der Ansprüche 1 bis 13, wobei die erste räumliche Auflösung in die erste Richtung berechnet wird, indem die Winkelausdehnung der Kachel (116) entlang der ersten Richtung geteilt wird durch die Anzahl von entlang der ersten Richtung angeordneten Detektorpixeln (106); und
die zweite räumliche Auflösung in die zweite Richtung berechnet wird, indem die Winkelausdehnung der Kachel (116) entlang der zweiten Richtung geteilt wird durch die Anzahl von entlang der zweiten Richtung angeordneten Teillichtquellen (112).

15. LIDAR-System (100) gemäß einem der Ansprüche 1 bis 14, wobei der Winkel zwischen der ersten Richtung und der zweiten Richtung nicht 0° oder 180° beträgt.

## Claims

1. The LIDAR system (100) comprising:
• a detector (104), which is set up in such a way that it detects light from a field of view (102),
• a light source (110) comprising a plurality of partial light sources (112) which are arranged such that they emit light into the field of view (102),
• a coarse angle control element (114) arranged to deflect light from the light source (110) to the field of view and to deflect light from the field of view (102) to the detector (104), and
• a light emission controller (118) which is arranged to control the partial light sources (112) of the plurality of partial light sources (112) such that each partial light source (112) of the plurality of partial light sources (112) emits light in a respective emission time period, **characterised in that** the coarse angle control element (114) is further arranged to determine an angular extent of a cache as a partial section of the field of view,
• the detector (104) comprises a plurality of detector pixels (106) arranged along a first direction, wherein a first spatial resolution in the first direction depends on the angular extent of the
tile (116) along the
first direction and on the number of detector pixels (106) arranged along the first direction,
• wherein each detector pixel (106) of the plurality of detector pixels (106) is associated with a respective subsection of the field of view (102),
• wherein the partial light sources (112) of the plurality of partial light sources (112) are arranged along a second direction at an angle to the first direction, wherein a second spatial resolution in the second direction depends on the angular extent of the tile (116) along the second direction and on the number of partial light sources (112) arranged along the second direction, and
• wherein each partial light source (112) of the plurality of partial light sources (112) is assigned to a respective partial section of the field of view (102).

2. The LIDAR system (100) according to claim 1, wherein the second direction is perpendicular to the first direction.

3. The LIDAR system (100) according to claim 1 or 2, wherein the coarse angle control element (114) is arranged to deflect light from the light source (110) at a first deflection angle to illuminate a portion of the field of view (102), and
wherein the coarse angle control element (114) is arranged to deflect light from the field of view (102) at a second deflection angle to deflect light from a portion of the field of view (102) onto the detector (104).

4. The LIDAR system (100) according to any one of claims 1 to 3, wherein the plurality of partial light sources (112) comprises a first partial light source and a second partial light source, and
wherein the light emission controller (118) is arranged to control the first partial light source and the second partial light source such that the first partial light source emits light in a first emission time period and the second partial light source emits light in a second emission time period,
wherein a waiting time between the first emission time period and the second emission time period is greater than or equal to a maximum transit time of the emitted light.

5. The LIDAR system (100) according to any one of claims 1 to 4, further comprising:
an angle control controller (204) arranged to control one or more light deflection characteristics of the coarse angle control element (114) to define a deflection angle of the deflected light.

6. The LIDAR system (100) according to claim 5,
wherein the coarse angle control element (114) is or comprises a liquid crystal polarisation grating,
wherein the angle control controller (204) is arranged to provide a control signal to the liquid crystal polarisation grating to control an orientation of the liquid crystal molecules, wherein the orientation of the liquid crystal molecules defines a grating period of the liquid crystal polarisation grating.

7. The LIDAR system (100) according to claim 5,
wherein the coarse angle control element (114) comprises a liquid crystal layer and a polarisation grating,
wherein the angle control controller (204) is arranged to provide a control signal to the liquid crystal layer to control an orientation of the liquid crystal molecules of the liquid crystal layer, wherein the orientation of the liquid crystal molecules defines the polarisation of light propagating through the liquid crystal layer.

8. The LIDAR system (100) according to any one of claims 1 to 7,
wherein the light source (110) comprises at least one laser light source.

9. The LIDAR system (100) according to any one of claims 1 to 8,
wherein the detector (104) comprises at least one photodiode which is arranged such that it generates an electrical signal when light impinges on the at least one photodiode.

10. The LIDAR system (100) according to any one of claims 1 to 9, further comprising:
a receiver optical arrangement (408), which is set up to receive light from the field of view and to direct the received light onto the detector (104).

11. The LIDAR system (100) according to any one of claims 1 to 10, further comprising: an emission optics arrangement (314) arranged to receive light from the light source (110) and to direct the received light to the coarse angle control element (114).

12. The LIDAR system (100) according to claim 11,
wherein the
emission optics arrangement (314) comprises a multi-lens array for mixing the light emitted from each partial light source of the plurality of partial light sources.

13. The LIDAR system (100) according to any one of claims 1 to 12, wherein a tile (116) at an edge of the field of view (102) along the first direction has a larger size than a tile (116) in the centre of the field of view (102) along the first direction.

14. The LIDAR system (100) according to any one of claims 1 to 13, wherein the first spatial resolution in the first direction is calculated by dividing the angular extent of the tile (116) along the first direction by the number of detector pixels (106) arranged along the first direction; and
the second spatial resolution in the second direction is calculated by dividing the angular extent of the tile (116) along the second direction by the number of partial light sources (112) arranged along the second direction.

15. The LIDAR system (100) according to any one of claims 1 to 14, wherein the angle between the first direction and the second direction is not 0° or 180°.

## Revendications

1. Système LIDAR (100) présentant :
• un détecteur (104), lequel est conçu de telle sorte qu'il détecte la lumière provenant d'un champ de vision (102),
• une source de lumière (110) présentant une pluralité de sources de lumière partielles (112), lesquelles sont conçues de telle sorte qu'elles émettent de la lumière dans le champ de vision (102),
• un élément de commande d'angle approximatif (114), lequel est conçu de telle sorte qu'il dévie la lumière de la source de lumière (110) vers le champ de vision et qu'il dévie la lumière du champ de vision (102) vers le détecteur (104), et
• un contrôleur d'émission de lumière (118), lequel est conçu pour commander les sources de lumière partielles (112) de la pluralité de sources de lumière partielles (112), de telle sorte que chaque source de lumière partielle (112) de la pluralité de sources de lumière partielles (112) émette de la lumière dans une période de temps d'émission respective, **caractérisé en ce que** l'élément de commande d'angle approximatif (114) est en outre conçu pour déterminer une étendue angulaire d'un carreau en tant que section partielle du champ de vision,
• le détecteur (104) présente une pluralité de pixels de détection (106), lesquels sont disposés le long d'une première direction, dans lequel une première résolution spatiale dans la première direction dépend de l'étendue angulaire du carreau (116) le long de la
première direction et du nombre de pixels de détection (106), lesquels sont disposés le long de la première direction,
• dans lequel chaque pixel de détection (106) de la pluralité de pixels de détection (106) est associé à une section partielle respective du champ de vision (102),
• dans lequel les sources de lumière partielles (112) de la pluralité de sources de lumière partielles (112) sont disposées le long d'une deuxième direction à un angle par rapport à la première direction, dans lequel une deuxième résolution spatiale dans la deuxième direction dépend de l'étendue angulaire du
carreau (116) le long de la deuxième direction et du
nombre de sources de lumière partielles (112),
lesquelles sont disposées le long de la deuxième direction, et
• dans lequel chaque source de lumière partielle (112) de la pluralité de sources de lumière partielles (112) est associée à une section partielle respective du champ de vision (102).

2. Système LIDAR (100) selon la revendication 1, dans lequel la deuxième direction est perpendiculaire à la première direction.

3. Système LIDAR (100) selon la revendication 1 ou 2, dans lequel l'élément de commande d'angle approximatif (114) est conçu de telle sorte qu'il dévie la lumière provenant de la source de lumière (110) selon un premier angle de déviation afin d'éclairer une section du champ de vision (102), et
dans lequel l'élément de commande d'angle approximatif (114) est conçu de telle sorte qu'il dévie la lumière provenant du champ de vision (102) selon un deuxième angle de déviation pour dévier la lumière d'une section du champ de vision (102) sur le détecteur (104).

4. Système LIDAR (100) selon l'une quelconque des revendications 1 à 3, dans lequel la pluralité de sources de lumière partielles (112) présente une première source de lumière partielle et une deuxième source de lumière partielle, et
dans lequel le contrôleur d'émission de lumière (118) est conçu pour commander la première source de lumière partielle et la deuxième source de lumière partielle, de telle sorte que la première source de lumière partielle émette de la lumière dans une première période de temps d'émission et que la deuxième source de lumière partielle émette de la lumière dans une deuxième période de temps d'émission,
dans lequel un temps d'attente entre la première période de temps d'émission et la deuxième période de temps d'émission est supérieur ou égal à un temps de propagation maximal de la lumière émise.

5. Système LIDAR (100) selon l'une quelconque des revendications 1 à 4, présentant en outre :
un contrôleur de commande angulaire (204), lequel est conçu pour commander une ou plusieurs caractéristiques de déviation de lumière de l'élément de commande d'angle approximatif (114) pour définir un angle de déviation de la lumière déviée.

6. Système LIDAR (100) selon la revendication 5,
dans lequel l'élément de commande d'angle approximatif (114) est ou présente un réseau de polarisation à cristaux liquides,
dans lequel le contrôleur de commande angulaire (204) est conçu pour fournir un signal de commande au réseau de polarisation à cristaux liquides afin de commander une orientation des molécules de cristaux liquides, dans lequel l'orientation des molécules de cristaux liquides définit une période de réseau du réseau de polarisation à cristaux liquides.

7. Système LIDAR (100) selon la revendication 5,
dans lequel l'élément de commande d'angle approximatif (114) présente une couche de cristaux liquides et une grille de polarisation,
dans lequel le contrôleur de commande angulaire (204) est conçu de telle sorte qu'il fournit un signal de commande à la couche de cristaux liquides pour commander une orientation des molécules de cristaux liquides de la couche de cristaux liquides, dans lequel l'orientation des molécules de cristaux liquides définit la polarisation de la lumière se propageant à travers la couche de cristaux liquides.

8. Système LIDAR (100) selon l'une quelconque des revendications 1 à 7,
dans lequel la source de lumière (110) présente au moins une source de lumière laser.

9. Système LIDAR (100) selon l'une quelconque des revendications 1 à 8,
dans lequel le détecteur (104) présente au moins une photodiode, laquelle est conçue de telle sorte qu'elle génère un signal électrique lorsque de la lumière est incidente sur l'au moins une photodiode.

10. Système LIDAR (100) selon l'une quelconque des revendications 1 à 9, présentant en outre :
un ensemble optique de réception (408), lequel est conçu pour recevoir la lumière provenant du champ de vision et pour diriger la lumière reçue sur le détecteur (104).

11. Système LIDAR (100) selon l'une quelconque des revendications 1 à 10, présentant en outre : un ensemble optique d'émission (314) conçu pour recevoir la lumière provenant de la source de lumière (110) et pour diriger la lumière reçue sur l'élément de commande d'angle approximatif (114).

12. Système LIDAR (100) selon la revendication 11,
dans lequel
l'ensemble optique d'émission (314) présente un réseau de lentilles multiples pour mélanger la lumière émise par chaque source de lumière partielle de la pluralité de sources de lumière partielles.

13. Système LIDAR (100) selon l'une quelconque des revendications 1 à 12, dans lequel un carreau (116) sur un bord du champ de vision (102) le long de la première direction a une taille plus grande qu'un carreau (116) au centre du champ de vision (102) le long de la première direction.

14. Système LIDAR (100) selon l'une quelconque des revendications 1 à 13, dans lequel la première résolution spatiale dans la première direction est calculée en divisant l'étendue angulaire du carreau (116) le long de la première direction par le nombre de pixels de détecteur (106) disposés le long de la première direction ; et
la deuxième résolution spatiale dans la deuxième direction est calculée en divisant l'étendue angulaire du carreau (116) le long de la deuxième direction par le nombre de sources de lumière partielles (112) disposées le long de la deuxième direction.

15. Système LIDAR (100) selon l'une quelconque des revendications 1 à 14, dans lequel l'angle entre la première direction et la deuxième direction n'est pas de 0° ou de 180°.
